(19) Europäisches Patentamt
European Patent Office
Office européen des brevets

(11) **EP 4 629 547 A1**

(12) **EUROPEAN PATENT APPLICATION**

(43) Date of publication:
**08.10.2025 Bulletin 2025/41**

(21) Application number: **25166334.0**

(22) Date of filing: **26.03.2025**

(51) International Patent Classification (IPC):
**H04L 5/00** (2006.01)

(52) Cooperative Patent Classification (CPC):
**H04L 5/0053; H04L 5/0044; H04L 5/0048;**
**H04L 5/0051; H04L 5/0094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2024 US 202463573489 P**
**03.04.2024 US 202463573499 P**

(71) Applicant: **Acer Incorporated**
**New Taipei City 221 (TW)**

(72) Inventors:
• **Lee, Chien-Min**
**221 New Taipei City (TW)**
• **Lo, Li-Chung**
**221 New Taipei City (TW)**
• **Chen, Jen-Hsien**
**221 New Taipei City (TW)**

(74) Representative: **Straus, Alexander**
**2K Patentanwälte - München**
**Bajuwarenring 14**
**82041 Oberhaching (DE)**

(54) **METHOD AND COMMUNICATION DEVICE FOR HANDLING UPLINK TRANSMISSION**

(57) A method for a communication device (14, 20) handling uplink, UL, transmission includes: receiving a first configuration from a network (12, 20), wherein the first configuration comprises a set of reference signals, RSs (302); performing at least one measurement for the set of RSs, to generate a measurement report (304); performing at least one communication operation with the network (12, 20) according to at least one configuration, wherein the at least one configuration is different from the first configuration; transmitting a first UL channel to the network (12, 20) in response to at least one RS of the set of RSs satisfying a condition (306); and transmitting a second UL channel comprising the measurement report to the network (12, 20) (308).

FIG. 3

EP 4 629 547 A1

**Description**

Field of the Invention

The present invention is related to methods and a communication device used in a wireless communication system, and more particularly, to methods and a communication device for handling uplink transmission.

Background of the Invention

A long-term evolution (LTE) system supporting the 3rd Generation Partnership Project (3GPP) Rel-8 standard and/or the 3GPP Rel-9 standard is developed by the 3GPP as a successor of the universal mobile telecommunication system (UMTS) for further enhancing performance of the UMTS to satisfy increasing needs of users.
An LTE-advanced (LTE-A) system, as its name implies, is an evolution of the LTE system. The LTE-A system targets faster switching between power states, improves performance at the coverage edge of an evolved Node-B (eNB), increases peak data rate and throughput, and includes advanced techniques, such as carrier aggregation (CA), uplink (UL) multiple-input multiple-output (UL-MIMO), etc.
A next generation radio access network (NG-RAN) supporting the 3GPP Rel-15 standard - the 3GPP Rel-19 standard is developed for further enhancing the LTE-A system. The NG-RAN includes one or more next generation Node-Bs (gNBs), and has properties of wider operation bands, different numerologies for different frequency ranges, massive MIMO, advanced channel codings, etc.
In a layer 1 (L1)/layer 2 (L2) triggered mobility (LTM) or a multi-input multi-output (MIMO) system, a communication device may periodically report the measurement report for beams or cells to the NG-RAN to perform a cell/beam switch procedure. However, transmissions for the periodic measurement report occupy UL resources. In addition, the communication device may not know whether to perform the cell/beam switch procedure without a cell/beam switch indication from the NG-RAN. Thus, how to handle UL transmissions to perform the cell/beam switch procedure is an important problem to be solved.

Summary of the Invention

This in mind, the present invention aims at providing methods and a communication device for handling a communication with a serving cell to solve the abovementioned problem.
This is achieved by methods and a communication device for handling a communication with a serving cell according to the independent claims, respectively. The dependent claims pertain to corresponding further developments and improvements.
As will be seen more clearly from the detailed description following below, a claimed method for a communication device handling uplink (UL) transmission comprises: receiving a first configuration from a network, wherein the first configuration comprises a set of reference signals (RSs); performing at least one measurement for the set of RSs, to generate a measurement report; performing at least one communication operation with the network according to at least one configuration, wherein the at least one configuration is different from the first configuration; transmitting a first UL channel to the network in response to at least one RS of the set of RSs satisfying a condition; and transmitting a second UL channel comprising the measurement report to the network.
A claimed communication device for handling uplink (UL) transmission comprises: at least one storage device; and at least one processing circuit, coupled to the at least one storage device, wherein the at least one storage device is configured to store instructions, and the at least one processing circuit is configured to execute the instructions of: receiving a first configuration from a network, wherein the first configuration comprises a set of reference signals (RSs); performing at least one measurement for the set of RSs, to generate a measurement report; performing at least one communication operation with the network according to at least one configuration, wherein the at least one configuration is different from the first configuration; transmitting a first UL channel to the network in response to at least one RS of the set of RSs satisfying a condition; and transmitting a second UL channel comprising the measurement report to the network.
A claimed method for a network handling uplink (UL) transmission comprises: transmitting a first configuration to a communication device, wherein the first configuration comprises a set of reference signals (RSs); performing at least one communication operation with the communication device according to at least one configuration, wherein the at least one configuration is different from the first configuration; receiving a first UL channel from the communication device in response to at least one RS of the set of RSs satisfying a condition; and receiving a second UL channel comprising a measurement report for the set of RSs from the communication device.

Brief Description of the Drawings

In the following, the invention is further illustrated by way of example, taking reference to the following drawings.

FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a flowchart of a process according to an example of the present invention.
FIG. 5 is a flowchart of a process according to an example of the present invention.
FIG. 6 is a flowchart of a process according to an example of the present invention.
FIG. 7 is a schematic diagram of a determination on whether at least one RS satisfies a condition according to an example of the present invention.
FIG. 8 is a schematic diagram of a determination on whether at least one RS satisfies a condition according to an example of the present invention.
FIG. 9 is a schematic diagram of a determination on whether at least one RS satisfies a condition according to an example of the present invention.
FIG. 10 is a schematic diagram of a determination on whether at least one RS satisfies a condition according to an example of the present invention.
FIG. 11 is a schematic diagram of a determination on whether at least one RS satisfies a condition according to an example of the present invention.
FIG. 12 is a schematic diagram of a determination on whether at least one RS satisfies a condition according to an example of the present invention.
FIG. 13 is a flowchart of a process according to an example of the present invention.
FIG. 14 is a flowchart of a process according to an example of the present invention.
FIG. 15 is a flowchart of a process according to an example of the present invention.
FIG. 16 is a flowchart of a process according to an example of the present invention.
FIG. 17 is a flowchart of a process according to an example of the present invention.
FIG. 18 is a flowchart of a process according to an example of the present invention.
FIG. 19 is a flowchart of a process according to an example of the present invention.

Detailed Description

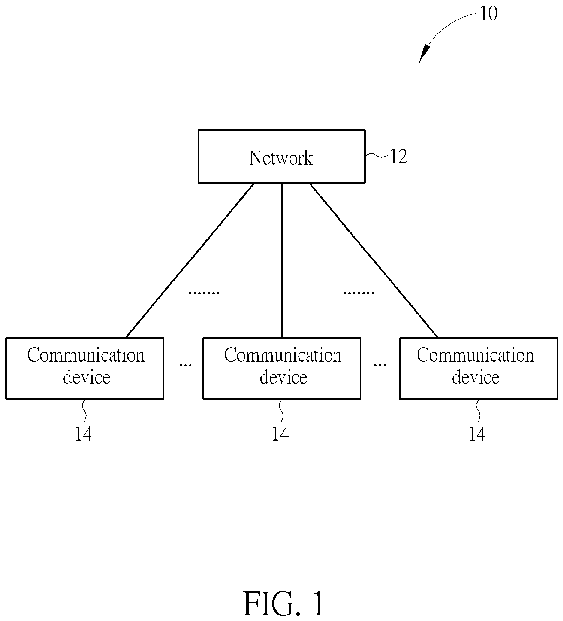

FIG. 1 is a schematic diagram of a wireless communication system 10 according to an example of the present invention. The wireless communication system 10 is briefly composed of a network 12 and a plurality of communication devices 14. The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the network 12 and a communication device 14 may communicate with each other via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the network 12 and a communication device 14 may communicate with each other via multiple serving cells (e.g., multiple serving carriers) including a primary cell (e.g., primary component carrier) and one or more secondary cells (e.g., secondary component carriers).
In FIG. 1, the network 12 and the communication devices 14 are simply utilized for illustrating the structure of the wireless communication system 10. Practically, the network 12 may be a universal terrestrial radio access network (UTRAN) including at least one Node-B (NB) in a universal mobile telecommunications system (UMTS). In one example, the network 12 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 12 may be a next generation radio access network (NG-RAN) including at least one next generation Node-B (gNB) and/or at least one fifth generation (5G) base station (BS). In one example, the gNB or the 5G BS of network 12 may include a NTN Gateway and a NTN payload. In one example, the gNB or the 5G BS of network 12 may be a transmission reception point (TRP). In one example, the network 12 may be any BS conforming to a specific communication standard to communicate with a communication device 14.
A new radio (NR) is a standard defined for a 5G system (or 5G network) to provide a unified air interface with better performance. gNBs are deployed to realize the 5G system, which supports advanced features such as enhanced Mobile Broadband (eMBB), Ultra Reliable Low Latency Communications (URLLC), massive Machine Type Communications (mMTC), etc. The eMBB provides broadband services with a greater bandwidth and a low/moderate latency. The URLLC provides applications (e.g., end-to-end communication) with properties of a higher reliability and a low latency. The examples of the applications include an industrial internet, smart grids, infrastructure protection, remote surgery and an intelligent transportation system (ITS). The mMTC is able to support internet-of-things (IoT) of the 5G system which include billions of connected devices and/or sensors.

Furthermore, the network 12 may also include at least one of the UTRAN/E-UTRAN/NG-RAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), Access and Mobility Management Function (AMF), Session Management Function (SMF), User Plane Function (UPF), Authentication Server Function (AUSF), etc. In one example, after the network 12 receives information transmitted by a communication device 14, the information may be processed only by the UTRAN/E-UTRAN/NG-RAN and decisions corresponding to the information are made at the UTRAN/E-UTRAN/NG-RAN. In one example, the UTRAN/E-UTRAN/NG-RAN may forward the information to the core network, and the decisions corresponding to the information are made at the core network after the core network processes the information. In one example, the information may be processed by both the UTRAN/E-UTRAN/NG-RAN and the core network, and the decisions are made after coordination and/or cooperation are performed by the UTRAN/E-UTRAN/NG-RAN and the core network.

A communication device 14 may be a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, or combination thereof. In addition, the network 12 and the communication device 14 can be seen as a transmitter or a receiver according to direction (i.e., transmission direction), e.g., for an uplink (UL), the communication device 14 is the transmitter and the network 12 is the receiver, and for a downlink (DL), the network 12 is the transmitter and the communication device 14 is the receiver.

A communication device 14 may perform a layer 1 (L1) measurement to generate a L1 measurement result, and may change a serving cell according to the L1 measurement result. This procedure may be called as a conditional L1/L2 triggered mobility (C-LTM). The C-LTM may support an intra-gNB-distributed unit (intra-gNB-DU) mobility, an intra-gNB-central unit (intra-gNB-CU) mobility and/or an inter-gNB-DU mobility. The C-LTM may support an intra-frequency mobility and/or an inter-frequency mobility. The C-LTM may be supported for a licensed spectrum. The C-LTM may support at least one of following scenarios: a primary cell (PCell) change in a non-CA scenario or/and a non-dual connection (non-DC) scenario; a PCell and secondary cell (SCell) change in a CA scenario; a DC scenario. The communication device 14 may execute a L3 handover command transmitted by the network 12.

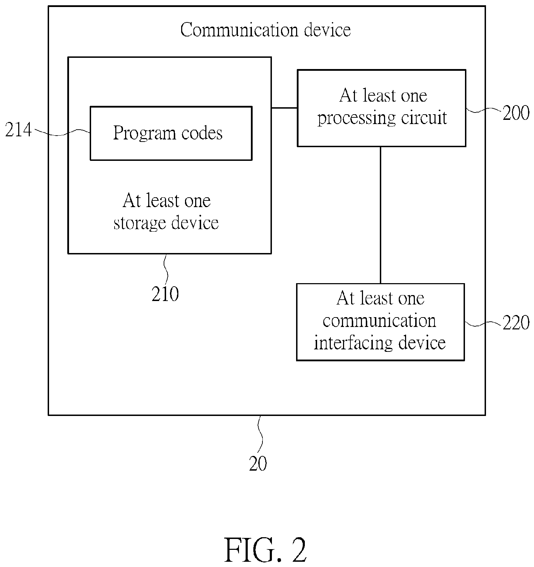

FIG. 2 is a schematic diagram of a communication device 20 according to an example of the present invention. The communication device 20 may be a communication device 14 or the network 12 shown in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

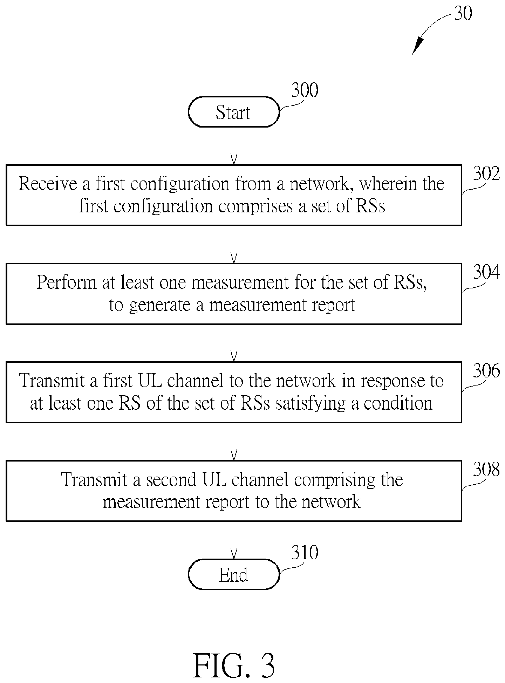

FIG. 3 is a flowchart of a process 30 according to an example of the present invention. The process 30 may be utilized in a communication device (e.g., a communication device 14 in FIG. 1 or the communication device 20 in FIG. 2), to handle UL transmission. The process 30 may be compiled into the program codes 214 and includes the following steps:

Step 300: Start.
Step 302: Receive a first configuration from a network, wherein the first configuration comprises a set of reference signals (RSs).

Step 304: Perform at least one measurement for the set of RSs, to generate a measurement report.
Step 306: Transmit a first UL channel to the network in response to at least one RS of the set of RSs satisfying a condition.
Step 308: Transmit a second UL channel comprising the measurement report to the network.
Step 310: End.

According to the process 30, the communication device receives a first configuration from a network, wherein the first configuration comprises a set of RSs. The communication device performs at least one measurement for the set of RSs, to generate a measurement report (e.g., a beam report). The communication device transmits a first UL channel to the network when (e.g., in response to) at least one RS of the set of RSs satisfying a condition. The communication device transmits a second UL channel comprising the measurement report to the network, e.g., after transmitting the first UL channel to the network. That is, the communication device transmits the measurement report via the second UL channel when the condition occurs instead of periodically reporting the measurement report. Thus, UL resources for periodically reporting the measurement report can be saved.

Realization of the process 30 is not limited to the above description. The following examples may be applied to realize the process 30.

In one example, the communication device performs at least one communication operation with the network according to at least one configuration. In one example, the at least one configuration is different from the first configuration. In one example, the at least one communication operation comprises at least one of following operations: receiving a downlink (DL) control information (DCI) from the network via a first cell; receiving a DL channel from a network via a second cell; and transmitting a fifth UL channel to the network via the second cell. In one example, the first cell is the same as or different from the second cell. In one example, the at least one configuration comprises at least one of following factors: a search space (SS) set configuration; a control resource set (CORESET) configuration; a second configuration for receiving a DL channel; a third configuration for configuring the first cell to receive the DCI; a transmission configuration indicator (TCI) state; and a sounding reference signal (SRS) resource indicator (SRI).

In one example, the first UL channel satisfies at least one of following conditions: the first UL channel comprises (e.g., is) a physical UL control channel (PUCCH); the first UL channel carries a 1-bit information; the first UL channel is configured with at least one of a first periodicity and a first offset; and the first UL channel indicates (e.g., notifies) that the second UL channel carries the measurement report. In one example, the first UL channel carries a channel state information (CSI). In one example, the 1-bit information indicates whether the second UL channel will be transmitted. For example, the 1-bit information with a first value (e.g., 0) indicates that the second UL channel will not be transmitted. For example, the 1-bit information with a second value (e.g., 1) indicates that the second UL channel will be transmitted.

In one example, the second UL channel satisfies at least one of following conditions: the second UL channel comprises (e.g., is) a configured grant physical UL shared channel (CG-PUSCH) or a physical UL control channel (PUCCH); and the second UL channel is configured with at least one of a second periodicity and a second offset. In one example, the communication device determines a duration for the second UL channel according to the first periodicity. In one example, the second UL channel comprises at least one of an event identity (ID), a candidate ID, a synchronization signal /physical broadcast channel (SS/PBCH) block (SSB) resource indicator (SSBRI) and a channel state information reference signal (CSI-RS) resource indicator (CRI). In one example, the candidate ID is an ID of a candidate cell, a candidate RS or a candidate beam.

In one example, the first UL channel and the second UL channel satisfy at least one of following conditions: the first UL channel and the second UL channel are configured with a same periodicity; and the first UL channel and the second UL channel are respectively configured with an offset. For example, the second periodicity is the same as the first periodicity, and the second offset is the same as the first offset. For example, the second periodicity is the same as the first periodicity, and the second offset is different from the first offset.

In one example, the communication device does not transmit the second UL channel until the communication device indicates by (or via) the first UL channel that the second UL channel will be transmitted, when the communication device indicates by (or via) the first UL channel that the second UL channel will not be transmitted. In one example, the communication device transmits the second UL channel until the communication device indicates that the second UL channel will not be transmitted by the first UL channel, when the communication device indicates that the second UL channel will be transmitted by the first UL channel. In one example, the second UL channel is available for the communication device until the communication device transmits the second UL channel, when the communication device indicates (or notifies) that the second UL channel will be transmitted by the first UL channel.

In one example, the communication device starts a first timer, after transmitting the second UL channel. In one example, the communication device does not retransmit the measurement report, before the first timer expiring (e.g., during the first timer running).

In one example, the measurement report comprises at least one of a first number of the set of RSs, at least one signal quality, a plurality of differential signal qualities and an event ID. In one example, the measurement report comprises a plurality of capacity indexes for the set of RSs. In one example, the first number is configured by a first higher layer signal. In one example, the first number is a fixed value. In one example, the first number of the set of RSs comprise (e.g., are) a first number of SSBRIs or a first number of CRIs. In one example, the at least one signal quality comprises (e.g., is) at least one layer 1 reference signals received power (L1-RSRP), at least one reference signals received quality (RSRQ) or at least one signal to interference plus noise ratio (SINR). In one example, a total number of the at least one signal quality and the plurality of differential signal qualities is the first number. In one example, the at least one signal quality and the plurality of differential signal qualities are respectively related to the signal quality of the first number of the set of RSs.

In one example, the communication device is configured (e.g., provided) by a second higher layer signal indicating a unified transmission configuration indicator (TCI) state. In one example, the communication device receives a DCI indicating a TCI state for a DL channel (e.g., a physical DL shared channel (PDSCH), a physical DL control channel (PDCCH) and/or a CSI-RS) from the network, when (e.g., if) the communication device is configured by the second higher layer signal indicating the unified TCI state. In one example, the communication device stops (or disables) transmitting the second UL channel, when (e.g., if) the communication device receives a DCI indicating a TCI state. In one example, the communication device stops (or disables) transmitting the second UL channel, when (e.g., if) the communication device receives a TCI state activation (e.g., by a medium access control-control element (MAC-CE)) from the network. For example, the communication device stops (or disables) transmitting the second UL channel, when (e.g., if) the communication device receives a TCI state activation (e.g., by a MAC-CE) from the network and when (e.g., if) the communication device is not configured by the second higher layer signal indicating the unified TCI state.

In one example, the communication device receives a DCI (e.g., a PDCCH order for a candidate cell of the communication device) from the network (e.g., from a serving cell of the communication device). In one example, the communication device transmits at least one physical random access channel (PRACH) to the candidate cell of the communication device according to the DCI. In one example, the communication device receives a DL channel (e.g., a DCI or a PDSCH) comprising a cell switch command from the network (e.g., from the serving cell of the communication device). In one example, the communication device performs a cell switch according to the cell switch command.

In one example, the communication device (e.g., a higher layer of the communication device such as a media access control (MAC) layer) determines whether the at least one RS satisfies the condition according to a second number of at least one event instance for the at least one RS and a third number. In one example, the third number is configured by a third higher layer signal. In one example, the third number is a fixed value.

In one example, the communication device (e.g., the higher layer of the communication device such as the MAC layer) determines that the at least one RS satisfies the condition in response to the second number of the at least one event instance for the at least one RS not being smaller than the third number. In one example, the communication device (e.g., the higher layer of the communication device such as the MAC layer) determines that the at least one RS does not satisfy the condition in response to the second number of at least one event instance for the at least one RS being smaller than the third number.

In one example, the communication device (e.g., the higher layer of the communication device such as the MAC layer) determines that the at least one RS satisfies the condition in response to the second number of the at least one event instance for the at least one RS within a time window not being smaller than the third number. In one example, the time window is configured by a fourth higher layer signal. In one example, the communication device (e.g., the higher layer of the communication device such as the MAC layer) determines that the at least one RS does not satisfy the condition in response to the second number of at least one event instance for the at least one RS within the time window being smaller than the third number.

In one example, the communication device starts (or restarts) a second timer configured with a third value in response to one of the at least one event instance occurring (or being occurred). In one example, the third value is configured by a fifth higher layer signal. In one example, the third value is not smaller than a minimum of the first periodicity and the second periodicity. In one example, the third value is not greater than twice the minimum. In one example, the communication device resets the counter (e.g., sets the counter as zero) for determining the second number of the at least one event instance in response to the second timer expiring.

In one example, the communication device sets (or resets) the time window to a fourth value. In one example, the fourth value is configured by a sixth higher layer signal. In one example, the communication device starts (or restarts) the time window in response to the first (e.g., earliest) one of the at least one event instance occurring. In one example, the communication device starts (or restarts) a third timer configured with the fourth value in response to the first one of the at least one event instance occurring. In one example, the communication device determines (e.g., a periodicity of) the at least one event instance according to a periodicity of the set of RSs.

In one example, a counter determines (e.g., indicates) the second number of the at least one event instance. In one example, the communication device increases the counter by one in response to an event instance (e.g., one of the at least one event instance) occurring. In one example, the communication device resets the counter (e.g., sets the counter as zero) for determining the second number of the at least one event instance after the time window. In one example, the communication device resets the counter (e.g., sets the counter as zero) for determining the second number of the at least one event instance in response to the third timer expiring.

In one example, the higher layer (e.g., the MAC layer) of the communication device handles the second timer. In one example, the higher layer (e.g., the MAC layer) of the communication device handles the third timer. In one example, the higher layer (e.g., the MAC layer) of the communication device handles the counter.

In one example, the communication device performs the UL transmission (e.g., transmits the first UL channel and/or the second UL channel) in response to the at least one RS satisfying the condition. In one example, the communication device does not perform the UL transmission (e.g., does not transmit the first UL channel and/or the second UL channel) in response to the at least one RS not satisfying the condition.

In one example, the communication device performs the UL transmission (e.g., transmits the first UL channel and/or the second UL channel) after (or within) the time window in response to the at least one RS satisfying the condition. In one example, the communication device performs the UL transmission (e.g., transmits the first UL channel and/or the second UL channel) in response to the at least one RS satisfying the condition, before, when or after the third timer expires. In one example, the communication device does not perform the UL transmission (e.g., does not transmit the first UL channel and/or the second UL channel) after the time window in response to the at least one RS not satisfying the condition. In one example, the communication device does not perform the UL transmission (e.g., does not transmit the first UL channel and/or the second UL channel) in response to the at least one RS not satisfying the condition, before, when or after the third timer expires.

In one example, the communication device performs the UL transmission (e.g., transmits the first UL channel and/or the second UL channel) in response to the at least one RS satisfying the condition. "The at least one RS satisfying the condition" represents that the second timer does not expire after the time window. In one example, the communication device performs the UL transmission (e.g., transmits the first UL channel and/or the second UL channel) in response to the at least one RS satisfying the condition. "The at least one RS satisfying the condition" represents that the second timer does not expire and the third timer expires. In one example, the communication device does not perform the UL transmission (e.g., does not transmit the first UL channel and/or the second UL channel) in response to the at least one RS not satisfying the condition. "The at least one RS not satisfying the condition" represents that the second timer expires after the time window. In one example, the communication device does not perform the UL transmission (e.g., does not transmit the first UL channel and/or the second UL channel) in response to the at least one RS not satisfying the condition. "The at least one RS not satisfying the condition" represents that the second timer expires after the third timer expires.

In one example, the communication device performs at least one operation in response to the at least one RS satisfying the condition. In one example, the at least one operation comprises at least one of following operations: resetting the counter (e.g., setting the counter as zero); starting (or restarting) the second timer configured with a fifth value; and starting (or restarting) the third timer configured with a sixth value. In one example, the fifth value is the same as or different from the third value. In one example, the sixth value is the same as or different from the fourth value.

In one example, the communication device determines (e.g., again) whether the at least one RS satisfies the condition according to a fourth number of at least one event instance for the at least one RS and a fifth number, after performing the at least one operation. In one example, the fourth number is the same as or different from the second number. In one example, the fifth number is the same as or different from the third number. The details for the communication device determining whether the at least one RS satisfies the condition can be referred to the previous paragraphs, and not narrated herein for brevity.

In one example, the at least one event instance indicates that at least one signal quality (e.g., at least one radio link quality) of the at least one RS becomes a threshold better than a signal quality of a RS. In one example, the at least one signal quality comprises (e.g., is) at least one L1-RSRP. In one example, a lower layer (e.g., a physical layer) of the communication device transmits at least one indicator to a higher layer (e.g., a MAC layer) of the communication device in response to the least one event instance occurring. In one example, the at least one indicator indicates that at least one condition corresponding to the at least one RS is satisfied.

In one example, each of the at least one event instance is associated with a first function of a serving cell of the communication device and/or a second function of a candidate cell of the communication device. In one example, each of the at least one event instance is associated with the first function of the serving RS of the communication device and/or the second function of the candidate RS of the communication device. For example, a condition (e.g., one of the at least one condition) is satisfied in response to the first function being smaller than the second function. For example, an event instance occurs in response to the first function being smaller than a first measurement threshold and/or the second function being greater than a second measurement threshold. In one example, the first measurement threshold and the second measurement threshold are configured by a seventh higher layer signal.

In one example, the first function is a measurement result of the serving cell (or the serving RS). In one example, the first function is a sum of a first measurement offset and the measurement result of the serving cell. In one example, the first measurement offset may be determined according to at least one of a first cell specific offset, a first RS specific offset and a first hysteresis parameter. In one example, the first cell specific offset, the first RS specific offset and the first hysteresis parameter are configured by an eighth higher layer signal. In one example, the second function is a measurement result of the candidate cell (or the candidate RS). In one example, the second function is a sum of a second measurement offset and the measurement result of the candidate cell. The second measurement offset may be determined according to at least one of a second cell specific offset, a second RS specific offset and a second hysteresis parameter. In one example, the second cell specific offset, the second RS specific offset and the second hysteresis parameter are configured by a ninth higher layer signal.

In one example, the first measurement offset, the second measurement offset, the first measurement threshold and the second measurement threshold are updated in response to the communication device starting (or restarting) the third timer configured with the sixth value. In one example, the first measurement offset, the second measurement offset, the first measurement threshold and the second measurement threshold are updated in response to a value of the counter being greater than zero.

In one example, the measurement result (e.g., the measurement result of the serving cell or the candidate cell) is associated with a filtering/averaging of a channel measurement. For example, an averaged measurement result is an average of measurement results (e.g., L1-RSRPs, RSRQs or SINRs) at different time instances (e.g.,

$$M_n = \frac{\sum_{t=0}^{t=T-1} M_{n-t}}{T}$$

, wherein $M_n$ is the averaged measurement result, $M_{n-t}$ is the measurement result at a time instance $n - t$, and $T$ is a number of the measurement results). For example, a current filtered measurement result is associated with a coefficient, a previous filtered measurement result and a current measurement result (e.g.,

$$M_n = (1 - \text{a}) \cdot M_{n-1} + a \cdot M_n'$$

, wherein $M_n$ is the current filtered measurement result, $a$ is the coefficient, $M_{n-1}$ is the previous filtered measurement result and $M_n'$ is the current measurement result). For example, an averaged measurement result is an average of measurement results of RSs (e.g., SS/PBCHs or CSI-RSs) in a spatial domain at a time instance (e.g., $M_n = \frac{\sum_{b=1}^{b=B} M_{n,b}}{B}$ , wherein $M_n$ is the averaged measurement result, $M_{n,b}$ is a measurement result of the b-th RS at a time instance $n$, and $B$ is a number of the RSs). For example, an averaged measurement result is an average of measurement results of RSs (e.g., SS/PBCHs or CSI-RSs) in a spatial domain at different time instances (e.g.,

$$M_n = \frac{\sum_{t=0}^{t=T-1} \frac{\sum_{b=1}^{b=B} M_{n-t,b}}{B}}{T}$$

). For example, a current filtered averaged measurement result is associated with a coefficient, a previous filtered averaged measurement result and a current averaged measurement result (e.g.,

$$M_n = (1 - \text{a}) \cdot M_{n-1} + a \cdot M_n'$$

, wherein $M_n$ is the current filtered averaged measurement result, a is the coefficient, $M_{n-1}$ is the previous filtered averaged measurement result, $M_n'$ is the current averaged measurement result and $M_n' = \frac{\sum_{b=1}^{b=B} M_{n,b}}{B}$ ). In one example, a lower layer (e.g., the physical layer) of the communication device handles the filtering/averaging of the channel measurement.

In one example, the at least one indicator (e.g., at least one LTM indicator) indicates whether the at least one condition corresponding to the at least one RS is satisfied. In one example, an indicator (e.g., one of the at least one indicator) with a seventh value (e.g., 1) indicates that a corresponding condition (e.g., one of the at least one condition) is satisfied. In one example, an indicator (e.g., one of the at least one indicator) with an eighth value (e.g., 0) indicates that a corresponding condition (e.g., one of the at least one condition) is not satisfied.

In one example, the communication device starts (or restarts) the third timer in response to the communication device obtaining a first plurality of (e.g., consecutive) indicators (e.g., the at least one indicator) with the seventh value. A number of the first plurality of (e.g., consecutive) indicators may be the third number or the fifth number, but is not limited herein. In one example, the communication device determines a number of a second plurality of (e.g., consecutive) indicators (e.g., the at least one indicator) with the eighth value obtained by the communication device during the third timer running, after the third timer expires.

In one example, the communication device determines that the condition is satisfied in response to the number of the second plurality of (e.g., consecutive) indicators being smaller than a threshold. In one example, the communication device performs the UL transmission (e.g., transmits the first UL channel and/or the second UL channel) in response to the condition being satisfied. In one example, the communication device determines that the condition is not satisfied in response to the number of the second plurality of (e.g., consecutive) indicators not being smaller than the threshold. In one example, the threshold is configured by a tenth higher layer signal. In one example, the threshold is a fixed value. It should be noted that "the communication device obtains (e.g., consecutive) indicators" represents that the lower layer (e.g., the physical layer) of the communication device transmits the (e.g., consecutive) indicators to the higher layer (e.g., the MAC layer) of the communication device.

In one example, the first UL channel corresponds to a first priority index. In one example, the communication device transmits the first UL channel and disables transmitting a third UL channel in response to the first priority index being greater than a second priority index of the third UL channel, e.g., when the first UL channel and the third UL channel collide in a same time period. In one example, the communication device disables transmitting the first UL channel and transmits the third UL channel in response to the first priority index not being greater than the second priority index of the third UL channel, e.g., when the first UL channel and the third UL channel collide in a same time period. In one example, the communication device transmits the first UL channel and disabling transmitting the third UL channel, e.g., when the first UL channel and the third UL channel collide in a same time period. In one example, the first UL channel may comprise (e.g., multiplex) a first UL signal (e.g., a first UCI) of the third UL channel. In one example, the communication device transmits the third UL channel and disabling transmitting the first UL channel, e.g., when the first UL channel and the third UL channel collide in a same time period. In one example, the third UL channel may comprise (e.g., multiplex) a second UL signal (e.g., a second UCI) of the first UL channel. In one example, the third UL channel comprises (e.g., is) a PUSCH (e.g., a configured grant PUSCH (CG-PUSCH)) or a PUCCH.

In one example, the second UL channel corresponds to a third priority index. In one example, the communication device transmits the second UL channel and disables transmitting a fourth UL channel in response to the third priority index being greater than a fourth priority index of the fourth UL channel, e.g., when the second UL channel and the fourth UL channel collide in a same time period. In one example, the communication device disables transmitting the second UL channel and transmits the fourth UL channel in response to the third priority index not being greater than the fourth priority index of the fourth UL channel, e.g., when the second UL channel and the fourth UL channel collide in a same time period. In one example, the communication device transmits the second UL channel and disabling transmitting the fourth UL channel, e.g., when the second UL channel and the fourth UL channel collide in a same time period. In one example, the second UL channel may comprise (e.g., multiplex) a third UL signal (e.g., a third UCI) of the fourth UL channel. In one example, the communication device transmits the fourth UL channel and disabling transmitting the second UL channel, e.g., when the second UL channel and the fourth UL channel collide in a same time period. In one example, the fourth UL channel may comprise (e.g., multiplex) a fourth UL signal (e.g., a fourth UCI) of the second UL channel. In one example, the fourth UL channel comprises (e.g., is) a PUSCH (e.g., a configured grant PUSCH (CG-PUSCH)) or a PUCCH.

In one example, the communication device transmits a PRACH and disabling transmitting the first UL channel, e.g., when the first UL channel and the PRACH collide in a same time period. In one example, the communication device transmits a PRACH and disabling transmitting the second UL channel, e.g., when the second UL channel and the PRACH collide in a same time period.

In one example, the communication device receives a DCI comprising a request from the network. In one example, the request triggers a CSI report. In one example, the communication device transmits a fifth UL channel (e.g., a PUSCH) carrying the CSI to the network according to the request.

In one example, the communication device transmits first capability information regarding to a maximum number for the set of RSs to the network. In one example, the communication device transmits second capability information to the network. The second capability information indicates at least one of following information: whether the communication device supports a UE triggered/indicated cell switch; whether the communication device supports an acquisition before a trigging event/condition; whether the communication device supports a timing advance (TA) acquisition after the triggering event/condition; whether the communication device supports a UE-based TA measurement; whether the communication device supports a time domain filtering/averaging of a channel measurement; and whether the communication device supports a spatial domain filtering/averaging of the channel measurement.

In one example, the communication device and the network operate in a carrier aggregation (CA) system. In one example, the communication device is configured with a plurality of serving cells. In one example, the communication device receives a DL channel (e.g., the DL channel described above, but is not limited herein) from a first serving cell of the network according to a DCI received from a second serving cell of the network. In one example, the communication device transmits a UL channel (e.g., the first UL channel, the second UL channel, the third UL channel, the fourth UL channel or the fifth UL channel, but is not limited herein) to a third serving cell of the network according to a DCI received from a fourth serving cell of the network. In one example, the communication device receives a DL channel from the network according to a DCI indicating at least one of a TCI state and a SRI. In one example, the communication device is configured with at least one of a SS set configuration, a SS configuration, a CORESET configuration and a configuration regarding to a DL channel repetition. In one example, the at least one of the SS set configuration, the SS configuration, the CORESET configuration and a configuration regarding to a DL channel repetition is used for receiving (e.g., monitoring) a DCI.

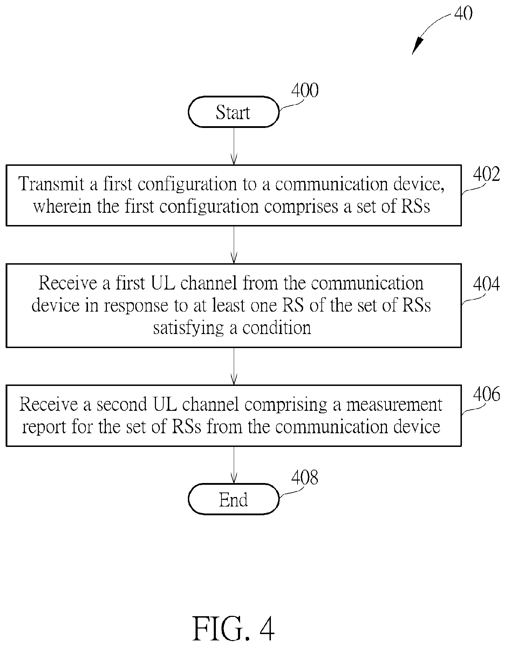

FIG. 4 is a flowchart of a process 40 according to an example of the present invention. The process 40 may be utilized in a network (e.g., a network 12 in FIG. 1 or the communication device 20 in FIG. 2), to handle UL transmission. The process 40 may be compiled into the program codes 214 and includes the following steps:

Step 400: Start.

Step 402: Transmit a first configuration to a communication device, wherein the first configuration comprises a set of RSs.

Step 404: Receive a first UL channel from the communication device in response to at least one RS of the set of RSs satisfying a condition.

Step 406: Receive a second UL channel comprising a measurement report for the set of RSs from the communication device.

(continued)

Step 408:    End.

According to the process 40, the network transmits a first configuration to a communication device, wherein the first configuration comprises a set of RSs. The network receives a first UL channel from the communication device in response to at least one RS of the set of RSs satisfying a condition. The network receives a second UL channel comprising a measurement report (e.g., a beam report) for the set of RSs from the communication device, e.g., after receiving the first UL channel from the communication device. That is, the network does not periodically receive the measurement report. Thus, UL resources for periodically reporting the measurement report can be saved.

Realization of the process 40 is not limited to the above description. The examples in the process 30 may be applied to the process 40, and are not narrated herein for brevity.

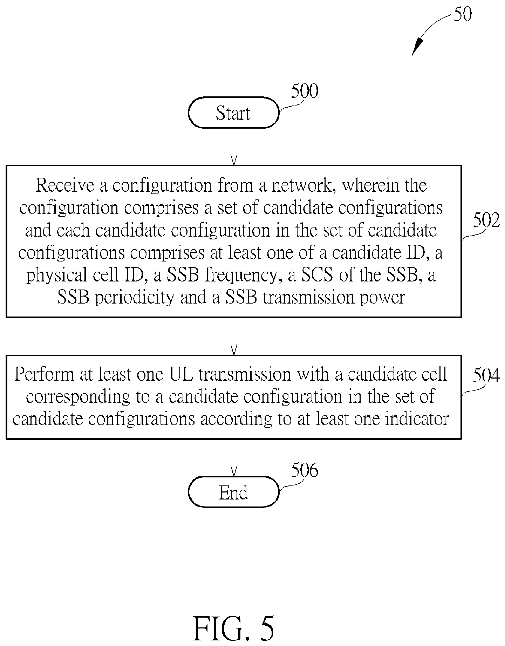

FIG. 5 is a flowchart of a process 50 according to an example of the present invention. The process 50 may be utilized in a communication device (e.g., a communication device 14 in FIG. 1 or the communication device 20 in FIG. 2), to handle UL transmission. The process 50 may be compiled into the program codes 214 and includes the following steps:

Step 500:    Start.
Step 502:    Receive a first configuration from a network, wherein the first configuration comprises a set of candidate configurations and each candidate configuration in the set of candidate configurations comprises at least one of a candidate ID, a physical cell ID, a SSB frequency, a subcarrier spacing (SCS) of the SSB, a SSB periodicity and a SSB transmission power.
Step 504:    Perform at least one UL transmission with a candidate cell corresponding to a candidate configuration in the set of candidate configurations according to at least one indicator.
Step 506:    End.

According to the process 50, the communication device receives a first configuration from a network. The first configuration comprises a set of candidate configurations. Each candidate configuration in the set of candidate configurations comprises at least one of a candidate ID, a physical cell ID, a SSB frequency, a SCS of the SSB, a SSB periodicity and a SSB transmission power. The communication device performs (e.g., determines to perform) at least one UL transmission with a candidate cell corresponding to a candidate configuration in the set of candidate configurations according to at least one indicator. That is, information in the first configuration is used for the communication device to perform at least one UL transmission (e.g., transmit a cell switch request). Thus, the communication device may perform a cell switch procedure without a cell switch indication from the network.

Realization of the process 50 is not limited to the above description. The following examples may be applied to realize the process 50.

In one example, the communication device receives the at least one indicator from the network. In one example, a lower layer (e.g., a physical layer) of the communication device transmits the at least one indicator to a higher layer (e.g., a MAC layer) of the communication device, e.g., in response to at least one event instance occurring. In one example, the at least one event instance indicates that at least one signal quality (e.g., at least one radio link quality) of at least one candidate RS becomes a first threshold better than a signal quality of a serving RS. In one example, the at least one event instance indicates that the at least one signal quality (e.g., the at least one radio link quality) of the at least one candidate RS is greater than a third measurement threshold and/or the signal quality of the serving RS being smaller than a fourth measurement threshold. In one example, the at least one indicator is related to at least one of the candidate configuration in the set of candidate configurations and a first RS (e.g., a candidate RS). In one example, the candidate configuration corresponds to the first RS.

In one example, the communication device performs at least one measurement for a first set of RSs according to a second configuration (e.g., the first configuration in the process 30), to generate the at least one measurement result. In one example, the second configuration is different from the first configuration. In one example, the second configuration is the same as the first configuration. In one example, the communication device determines that at least one condition corresponding to at least one RS of the first set of RSs is satisfied according to the at least one measurement result. The detail of the at least one condition can be referred to the examples for the process 30, and does not narrated herein for brevity.

In one example, the communication device starts (or restarts) a first timer (i.e., the third timer in the examples for the process 30) in response to one of the at least one condition being satisfied. In one example, the communication device (e.g., with no valid TA for the candidate cell of the communication device after a first time period) transmits a UL channel to a serving cell of the communication device during the first timer running. The first time period may be with a fixed length or may be configured by the network. In one example, the communication device receives the at least one indicator (e.g., a PDCCH order) from the serving cell of the communication device, e.g., after transmitting the UL channel. In one example, the communication device determines whether an execution condition is satisfied in response to the first timer expiring. The execution condition may be the condition in the process 30. The detail of the execution condition can be referred to the examples for the process 30, and does not narrated herein for brevity.

In one example, the UL channel comprises (e.g., is) a PUCCH which carries a UCI. In one example, the UL channel is associated with a TA acquisition or a resource acquisition. In one example, the UL resource for the UL channel corresponds to at least one of a candidate cell ID and a SSB of the candidate cell. In one example, the communication device indicates the candidate cell ID (e.g., a candidate ID configured by a candidate configuration) via the UL channel to the serving cell of the communication device, e.g., when the one of the at least one condition is satisfied. In one example, the communication device indicates a predetermined value, e.g., when the at least one condition is not satisfied. In one example, the communication device indicates an index (or a group index) of a RS via the UL channel to the serving cell of the communication device. In one example, the RS is a SSB or a CSI-RS. In one example, the RS with an odd ID corresponds to a first group index. In one example, the RS with an even ID corresponds to a second group index.

In one example, the UL channel is configured with a second timer (e.g., ProhibitTimer). In one example, the communication device transmits the UL channel and starts (or restarts) the second timer in response to the second timer not running during a second time period for transmitting the UL channel. In one example, the UL channel comprises (e.g., is) a PUCCH or a PUSCH which carries a UCI (e.g., a SR) or a MAC-CE. In one example, the UCI or the MAC-CE comprises at least one of following information: a candidate cell ID (e.g., a candidate ID configured by a candidate configuration), an index (e.g., an SSBRI or a CRI) of a RS (e.g., an SSB or a CSI-RS) of the candidate cell, a signal quality (e.g., an RSRP, an RSRQ and/or an SINR) of the RS, differential signal qualities between RSs, a signal quality (e.g., an RSRP, an RSRQ and/or an SINR) of the serving cell, and differential signal qualities between the candidate cells (or candidate RSs) and the serving cell (or serving RS).

In one example, the at least one indicator comprises a DCI (e.g., a PDCCH order) transmitted by the network. In one example, the DCI comprises at least one of: a random access preamble (RAP) set indicator, a RAP indicator, a SS/PBCH index, a PRACH mask index, a cell indicator and a PRACH retransmission indicator. In one example, the communication device determines a RAP according to the DCI. In one example, the step of performing the at least one UL transmission comprises: the communication device transmits a PRACH (e.g., to a candidate cell) according to the DCI. In one example, the RAP set indicator indicates a RAP set configured by a first higher layer signal. The first higher layer signal configures more than one RAP sets. In one example, the RAP indicator indicates at least one first RAP index. The at least one first RAP index may be comprised in the RAP set indicated by the RAP set indicator. In one example, the SS/PBCH index indicates a SS/PBCH for determining a RACH occasion for a PACH transmission, e.g., if the at least one first RAP index is not all zero. In one example, the SS/PBCH index is reserved, e.g., if the at least one first RAP index is all zero. In one example, the PRACH mask index indicates the RACH occasion associated with a SS/PBCH indicated by the SS/PBCH index, e.g., if the at least one first RAP index is not all zero. In one example, the cell indicator indicates a cell (e.g., a candidate cell or the serving cell) for the PACH transmission. For example, a first bit field index with a first value (e.g., 0) of the cell indicator is mapped to the serving cell. For example, a second bit field index with a second value (e.g., a value different from the first value) of the cell indicator is mapped to a candidate cell. In one example, the PRACH retransmission indicator indicates an initial transmission or a retransmission of a PRACH, e.g., if the cell indicated by the cell indicator is a candidate cell.

In one example, the communication device receives a first DCI (e.g., a PDCCH order) for initiating a random access (RA) procedure from the network. In one example, the communication device determines a cell (e.g., a candidate cell) for initiating the RA procedure according to the cell indicator in the first DCI. In one example, the communication device determines whether at least one first RAP index indicated by the RAP indicator in the first DCI is all zero.

In one example, the communication device performs at least one of following operation in response to the at least one first RAP index indicated by the RAP indicator in the first DCI not being all zero: selecting at least one SS/PBCH index corresponding to at least one resource indicator (e.g., SSBRI(s) and/or CRI(s)) of a candidate cell that satisfies the one of the at least one condition (e.g., according to the cell indicator in the first DCI); selecting at least one first PRACH according to at least one of the at least one SS/PBCH index, the cell indicator, the RAP indicator and the PRACH mask index; and transmitting the selected at least one first PRACH to the candidate cell.

In one example, the communication device performs at least one of following operation in response to the at least one first RAP index indicated by the RAP indicator in the first DCI being all zero: selecting at least one second RAP index from a RAP set corresponding to the at least one resource indicator (e.g., SSBRI(s) and/or CRI(s)) of a candidate cell that satisfies the one of the at least one condition (e.g., according to the cell indicator in the first DCI); and performing the RA procedure according to the selected at least one second RAP index.

In one example, the communication device performs at least one of following operation in response to the at least one first RAP index indicated by the RAP indicator in the first DCI are not all zero: determining whether the RAP indicator indicates more than one RAP index; selecting at least one third RAP index from the at least one first RAP index corresponding to the at least one resource indicator (e.g., SSBRI(s) and/or CRI(s)) of a candidate cell that satisfies the one of the at least one condition (e.g., according to the cell indicator in the first DCI) and performing the RA procedure according to at least one of the selected at least one third RAP index and the PRACH mask index, in response to the RAP indicator indicating more than one RAP index; and performing the RA procedure according to at least one of the cell indicator, the RAP indicator, a SS/PBCH index and the PRACH mask index, in response to the RAP indicator not indicating more than one RAP index.

In one example, the communication device transmits more than one PRACHs corresponding to the at least one SS/PBCH, e.g., if the more than one PRACHs do not overlap in time.

In one example, the communication device monitors a first DL channel transmitted by the serving cell of the communication device within a first window, after transmitting the at least one first PRACH to the candidate cell. In one example, the first DL channel comprises (e.g., is) a second DCI. In one example, the first window comprises (e.g., is) a random access response (RAR) window configured by a second higher layer signal. In one example, the first window is started, after the communication device transmits the at least one first PRACH. In one example, the communication device determines (e.g., obtains) at least one of following information according to the first DL channel or a MAC-CE (e.g., transmitted by a PDSCH scheduled by the first DL channel): a candidate ID (e.g., a candidate cell ID), a TA value, a scheduling or an activation of a PUSCH (e.g., a CG-PUSCH), a SS/PBCH for a PUSCH (e.g., a CG-PUSCH) and a SS/PBCH for a TA. In one example, the communication device starts (or restarts) a third timer (e.g., TimeAlignmentTimer) for a candidate cell (e.g., indicated by the MAC-CE or the candidate ID) in response to the communication device obtaining (e.g., receiving) the TA value. In one example, the third timer is configured with a third value. In one example, the third value is configured (e.g., by a third higher layer signal) per candidate cell. In one example, the third value is a common value configured (e.g., by a fourth higher layer signal) for all candidate cells of the communication device. In one example, the third value is indicated in a MAC-CE (e.g., transmitted by the PDSCH scheduled by the first DL channel). In one example, the third value is indicated in the first DL channel.

In one example, the communication device calculates (or computes) at least one TA value for the at least one UL transmission. That is, the communication device performs UE-based TA measurement(s), and determines the at least one TA value according to UE-based TA measurement result(s).

In one example, the communication device determines the at least one TA value for the at least one UL transmission according to a MAC-CE transmitted by the network. In one example, the communication device starts (or restarts) a fourth timer in response to receiving the at least one TA value.

In one example, the at least one UL transmission comprises a cell switch information. In one example, the at least one UL transmission comprises (e.g., is) a CG-PUSCH. In one example, the cell switch information comprises (e.g., is) a cell switch request. In one example, the communication device determines at least one UL resource for the at least one UL transmission according to at least one of a higher layer signaling and a MAC-CE. In one example, the at least one UL resource for the at least one UL transmission satisfies at least one of following conditions: the at least one UL resource for the at least one UL transmission is configured with a periodicity; and the at least one UL resource for the at least one UL transmission is indicated with a third time period, and is valid (or available) within the third time period. In one example, the periodicity is configured by a fifth higher layer signal. In one example, the communication device performs the at least one UL transmission via the at least one UL resource. In one example, the communication device periodically performs the at least one UL transmission via the at least one UL resource according to the periodicity.

In one example, the communication device determines that the cell switch procedure is completed by receiving a message (e.g., a cell switch complete message) from the network. In one example, the message comprises (e.g., is) an indicator or a configuration.

In one example, the at least one indicator indicates at least one of following events: a fifth timer expires; and a fourth value of a first counter is not greater than a second threshold. In one example, the second threshold is zero or a positive integer, but is not limited herein. In one example, the fifth timer is related to a second RS. In one example, the second RS is one of the first set of RSs. In one example, the communication device starts (or restarts) the fifth timer in response to a first condition being satisfied. In one example, the first condition is satisfied in response to a fifth value of a second counter not being smaller than a third threshold. In one example, the communication device increases the fourth value of the first counter (e.g., by one) in response to at least one event instance not being occurred. In one example, the communication device increases the fifth value of the second counter (e.g., by one) in response to the at least one event instance being occurred. In one example, the fourth value of the first counter indicates a number of the at least one event instance which is not occurred. In one example, the fifth value of the second counter indicates a number of the at least one event instance which is occurred. In one example, the communication device is configured with the second threshold and the third threshold by a sixth higher layer signal.

In one example, the lower layer (e.g., the physical layer) of the communication device transmits an indicator (e.g., an LTM indicator) with a sixth value (e.g., 0) to the higher layer (e.g., the MAC layer) of the communication device in response to the at least one event instance not being occurred. In one example, the lower layer (e.g., the physical layer) of the communication device transmits an indicator (e.g., an LTM indicator) with a seventh value (e.g., 1) to the higher layer (e.g., the MAC layer) of the communication device in response to the at least one event instance being occurred. In one example, the fourth value of the first counter indicates a number of (e.g., consecutive) indicators (e.g., consecutive LTM indicators) with the sixth value. In one example, the fifth value of the second counter indicates a number of (e.g., consecutive) indicators (e.g., consecutive LTM indicators) with the seventh value. In one example, the at least one event instance occurs when at least one signal quality (e.g., at least one radio link quality) of at least one candidate RS becomes a fourth threshold better (or not better) than a signal quality of a serving RS. In one example, the at least one event instance occurs when the at least one signal quality (e.g., the at least one radio link quality) of the at least one candidate RS is greater (or not greater) than a fifth measurement threshold and/or the signal quality of the serving RS being smaller (not smaller) than a sixth measurement threshold.

In one example, the at least one UL transmission satisfies at least one of following conditions: the at least one UL transmission comprises at least one second PRACH in response to no TA for the candidate cell being valid; and the at least one UL transmission comprises at least one PUSCH in response to at least one TA for the candidate cell being valid. In one example, the at least one second PRACH comprises the cell switch information (e.g., the cell switch request). In one example, the at least one PUSCH comprises the cell switch information (e.g., the cell switch request). In one example, the at least one TA for the candidate cell is valid in response to a sixth timer (e.g., TimeAlignmentTimer) associated with the candidate cell not expiring.

In one example, the at least one UL transmission satisfies at least one of following conditions: the at least one UL transmission comprises the at least one second PRACH in response to no TA for the candidate cell being valid; the at least one UL transmission comprises the at least one PUSCH transmitted after a fourth time period in response to the at least one TA for the candidate cell being valid and the communication device being in the fourth time period; and the at least one UL transmission comprises the at least one PUSCH in response to the at least one TA for the candidate cell being valid and the communication device not being in the fourth time period. In one example, the fourth time period is configured by a seventh higher layer signal. In one example, the fourth time period is started after the communication device transmits the at least one first PRACH (e.g., to the candidate cell) according to the first DCI (e.g., the PDCCH order).

In one example, the communication device monitors a second DL channel transmitted by a candidate cell of the communication device within a second window, after transmitting the PRACH (e.g., to the candidate cell) according to the first DCI (e.g., the PDCCH order). In one example, the second DL channel comprises (e.g., is) a third DCI. In one example, the second window comprises (e.g., is) a RAR window configured by an eighth higher layer signal.

In one example, the communication device stops performing the cell switch procedure (e.g., transmitting the cell switch information) for the candidate cell in response to no TA for the candidate cell being valid. In one example, the communication device stops performing the cell switch procedure for the candidate cell after the fourth time period in response to no TA for the candidate cell being valid and the communication device being in the fourth time period. In one example, the communication device stops performing the cell switch procedure for the candidate cell in response to no TA for the candidate cell being valid and the communication device not being in the fourth time period.

In one example, the at least one UL transmission satisfies at least one of following conditions: the at least one UL transmission comprises the at least one PUSCH in response to the at least one TA for the candidate cell being valid; the at least one UL transmission comprises the at least one second PRACH in response to no TA for the candidate cell being valid and a PRACH resource (e.g., for the cell switch procedure) being configured for the candidate cell. In one example, the communication device stops performing the cell switch procedure for the candidate cell in response to no TA for the candidate cell being valid and the PRACH resource (e.g., for the cell switch procedure) not being configured for the candidate cell.

In one example, the communication device restarts the cell switch procedure for a suitable candidate cell, after stopping performing the cell switch procedure for the candidate cell. In one example, the communication device restarts the cell switch procedure for the suitable candidate cell, after stopping performing the cell switch procedure for the candidate cell after the fourth time period. In one example, the suitable candidate cell satisfies the one of the at least one condition.

In one example, the communication device with no valid TA transmits (e.g., determines to transmit) the cell switch request to the candidate cell. In one example, the communication device increases a third counter (e.g., for the candidate cell) by one in response to the communication device with no valid TA transmitting (e.g., determining to transmit) the cell switch request to the candidate cell. In one example, the communication device with no valid TA continues to perform the TA acquisition or the resource acquisition (e.g., by transmitting the UL channel as mentioned above) in response to at least one of the candidate cell still satisfies the one of the at least one condition and the third counter not being greater than a fifth threshold. In one example, the communication device stops performing the cell switch procedure for the candidate cell in response to at least one of the candidate cell not satisfying the one of the at least one condition and the third counter being greater than the fifth threshold.

In one example, the communication device obtains a plurality of indicators associated with a plurality of candidate cells. In one example, the plurality of indicators comprise the at least one indicator. In one example, the communication device selects the candidate cell from the plurality of candidate cells in a priority order according to at least one of following factors: the candidate ID or the physical cell ID; a first determination on whether the candidate cell comprises at least one valid TA; a second determination on whether the candidate cell is a secondary cell (Scell) for the communication device; and a third determination on whether the candidate cell is configured with at least one PRACH resource.

In one example, the communication device does not perform a UL synchronization procedure according to a higher layer configuration, e.g., if the communication device is capable on a UE-based TA measurement. In one example, the communication device transmits a message or information (e.g., a UL resource request message) for a cell switch request to the network, e.g., if a TA value of the candidate cell is the same as that of the serving cell or the TA value of the candidate cell is zero. In one example, the communication device transmits the message or the information (e.g., the UL resource request message) for the cell switch request to the network, e.g., when the communication device calculates (or computes) the at least one TA value for the at least one UL transmission. In one example, the communication device does not transmit the message or the information (e.g., the UL resource request message) for the cell switch request to the network, e.g., when communication device has been configured with a UL resource (e.g., CG-PUSCH) for the cell switch request

In one example, the at least one first/second PRACH transmitted to the candidate cell is at least one contention-free PRACH resource configured by the network. In one example, the communication device is configured with a set of PRACH resources for each candidate cell. In one example, the communication device increases the third counter by one after the fourth time period in response to the communication device not obtaining a TA value for the candidate cell. In one example, the communication device retransmits the at least one first/second PRACH after the fourth time period in response to the communication device not obtaining a TA value for the candidate cell. In one example, the communication device determines a transmission power for the at least one first/second PRACH according to the third counter.

In one example, the communication device starts (or restarts) the third timer (e.g., TimeAlignmentTimer) configured with the third value in response to the communication device receiving the DL channel. In one example, the communication device determines whether an execution condition is satisfied in response to the third timer expiring. In one example, the communication device performs at least one of following operations in response to the execution condition not being satisfied and the third timer expiring: stopping performing the cell switch procedure for the candidate cell; and restarts the cell switch procedure for the suitable candidate cell, after stopping performing the cell switch procedure for the candidate cell. The execution condition may be the condition in the process 30. The detail of the execution condition can be referred to the examples for the process 30, and does not narrated herein for brevity.

In one example, a TA or a resource for transmitting the cell switch request becomes invalid, before the execution condition is satisfied. In one example, the communication device increases the third counter by one in response to a TA or a resource for transmitting the cell switch request being invalid. In one example, the communication device continues to perform the TA acquisition or the resource acquisition in response to at least one of the candidate cell still satisfies the one of the at least one condition and the TA or the resource for transmitting the cell switch request being invalid. In one example, the communication device stops performing the cell switch procedure for the candidate cell in response to the candidate cell not satisfying the one of the at least one condition.

In one example, the communication device transmits capability information to the network. In one example, the capability information indicates at least one of following information: whether the communication device supports a UE triggered/indicated cell switch; whether the communication device supports an acquisition before a trigging event/condition; whether the communication device supports a TA acquisition or a resource acquisition after the triggering event/condition; whether the communication device supports a UE-based TA measurement; whether the communication device supports a time domain filtering/averaging of a channel measurement; and whether the communication device supports a spatial domain filtering/averaging of the channel measurement.

It should be noted that the examples for the process 30 can be applied to the process 50, and the examples for the process 50 can be applied to the process 30.

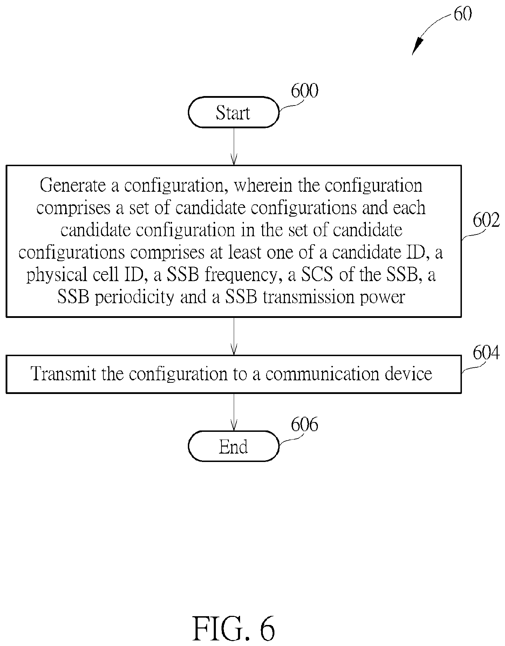

FIG. 6 is a flowchart of a process 60 according to an example of the present invention. The process 60 may be utilized in a network (e.g., a network 12 in FIG. 1 or the communication device 20 in FIG. 2), to handle UL transmission. The process 60 may be compiled into the program codes 214 and includes the following steps:

| Step 600: | Start. |
|---|---|
| Step 602: | Generate a first configuration, wherein the first configuration comprises a set of candidate configurations and each candidate configuration in the set of candidate configurations comprises at least one of a candidate ID, a physical cell ID, a SSB frequency, a SCS of the SSB, a SSB periodicity and a SSB transmission power. |
| Step 604: | Transmit the first configuration to a communication device. |
| Step 606: | End. |

According to the process 60, the network generates a first configuration. The first configuration comprises a set of candidate configurations. Each candidate configuration in the set of candidate configurations comprises at least one of a candidate ID, a physical cell ID, a SSB frequency, a SCS of the SSB, a SSB periodicity and a SSB transmission power. The network transmits the first configuration to a communication device. That is, information in the first configuration is used for the communication device to perform at least one UL transmission (e.g., transmit a cell switch request). Thus, the communication device may perform a cell switch procedure without a cell switch indication from the network.

Realization of the process 60 is not limited to the above description. The examples in the process 50 may be applied to the process 60, and are not narrated herein for brevity.

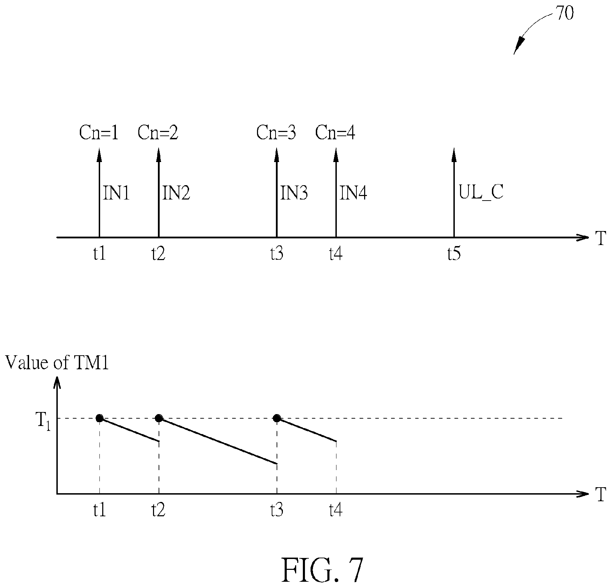

FIG. 7 is a schematic diagram of a determination 70 on whether at least one RS satisfies a condition (e.g., the condition in the process 30 or the execution condition in the examples for the process 50) according to an example of the present invention. A communication device is configured with a timer TM1 and a counter. The timer TM1 and the counter are configured with a fixed value T1 and a maximum number Cn_MAX of a variable Cn, respectively. The communication device sets the variable Cn as 0, and the maximum number Cn_MAX of the variable Cn is configured as 4 by a network. In FIG. 7, the communication device and the timer TM1 correspond to a time domain T. Each of arrows on the time domain T for the communication device represents that a lower layer (e.g., the physical layer) of the communication device transmits an indication to a higher layer (e.g., the MAC layer) of the communication device at a time instance, or represents that the communication device transmits a UL channel to the network at a time instance.

At a time instance t1, a first event instance for a RS (e.g., a candidate RS) occurs. The communication device transmits a first indicator IN1 corresponding to the RS, increases the counter by 1 (i.e., Cn=1) and starts the timer TM1, in response to the first event instance occurring. At a time instance t2, a second event instance for the RS occurs. The communication device transmits a second indicator IN2 corresponding to the RS, increases the counter by 1 (i.e., Cn=2) and restarts the timer TM1, in response to the second event instance occurring. At a time instance t3, a third event instance for the RS occurs. The communication device transmits a third indicator IN3 corresponding to the RS, increases the counter by 1 (i.e., Cn=3) and restarts the timer TM1, in response to the third event instance occurring. At a time instance t4, a fourth event instance for the RS occurs. The communication device transmits a fourth indicator IN4 corresponding to the RS and increases the counter by 1 (i.e., Cn=4), in response to the fourth event instance occurring.

In FIG. 7, since the counter achieves the maximum number Cn_MAX at the time instance t4 (i.e., the variable Cn is not smaller than the maximum number Cn_MAX), the communication device determines whether the RS satisfies the condition. In detail, the communication device determines the RS satisfies the condition in response to the timer TM1 not expiring at the time instance t4. Accordingly, the communication device transmits UL channel(s) UL_C to the network at a time instance t5 in response to the RS satisfying the condition. In addition, the communication device resets the variable Cn as 0 in response to the communication device transmitting the UL channel(s) UL_C to the network.

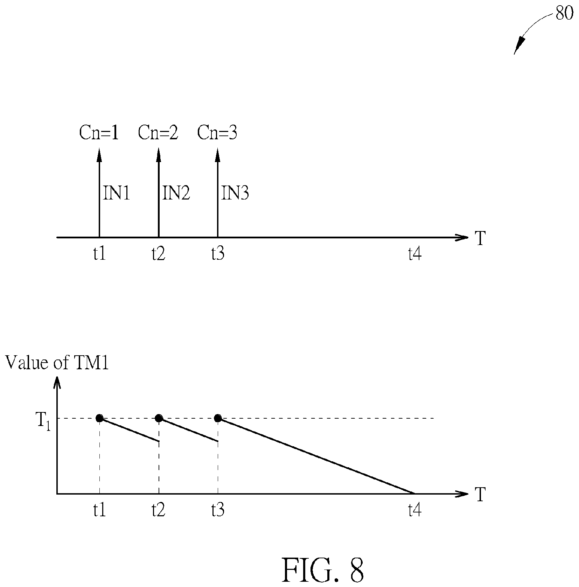

FIG. 8 is a schematic diagram of a determination 80 on whether at least one RS satisfies a condition (e.g., the condition in the process 30 or the execution condition in the examples for the process 50) according to an example of the present invention. A communication device is configured with a timer TM1 and a counter. The timer TM1 and the counter are configured with a fixed value T1 and a maximum number Cn_MAX of a variable Cn, respectively. The communication device sets the variable Cn as 0, and the maximum number Cn_MAX of the variable Cn is configured as 4 by a network. In FIG. 8, the communication device and the timer TM1 correspond to a time domain T. Each of arrows on the time domain T for the communication device represents that a lower layer (e.g., the physical layer) of the communication device transmits an indication to a higher layer (e.g., the MAC layer) of the communication device at a time instance, or represents that the communication device a UL channel to the network at a time instance.

At a time instance t1, a first event instance for a RS occurs. The communication device transmits a first indicator IN1 corresponding to the RS, increases the counter by 1 (i.e., Cn=1) and starts the timer TM1, in response to the first event instance occurring. At a time instance t2, a second event instance for the RS occurs. The communication device transmits a second indicator IN2 corresponding to the RS, increases the counter by 1 (i.e., Cn=2) and restarts the timer TM1, in response to the second event instance occurring. At a time instance t3, a third event instance for the RS occurs. The communication device transmits a third indicator IN3 corresponding to the RS, increases the counter by 1 (i.e., Cn=3) and restarts the timer TM1, in response to the third event instance occurring.

In FIG. 8, since the counter does not achieve the maximum number Cn_MAX at the time instance t4 (i.e., the variable Cn is smaller than the maximum number Cn_MAX), the communication device determines that the RS does not satisfy the condition. Accordingly, the communication device does not transmit UL channel(s) to the network in response to the RS not satisfying the condition. In addition, the communication device resets the variable Cn as 0 in response to the timer TM1 expiring.

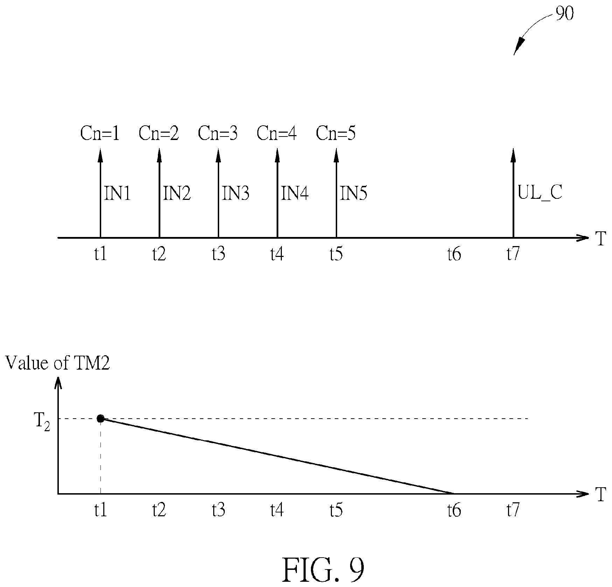

FIG. 9 is a schematic diagram of a determination 90 on whether at least one RS satisfies a condition (e.g., the condition in the process 30 or the execution condition in the examples for the process 50) according to an example of the present invention. A communication device is configured with a timer TM2 and a counter. The timer TM2 and the counter are configured with a fixed value T2 and a threshold number Cn_TH of a variable Cn, respectively. The communication device sets the variable Cn as 0, and the threshold number Cn_TH of the variable Cn is configured as 4 by a network. In FIG. 9, the communication device and the timer TM2 correspond to a time domain T. Each of arrows on the time domain T for the communication device represents that a lower layer (e.g., the physical layer) of the communication device transmits an indication to a higher layer (e.g., the MAC layer) of the communication device at a time instance, or represents that the communication device transmits a UL channel to the network at a time instance.

At a time instance t1, a first event instance for a RS occurs. The communication device transmits a first indicator IN1 corresponding to the RS, increases the counter by 1 (i.e., Cn=1) and starts the timer TM2, in response to the first event instance occurring. At a time instance t2, a second event instance for the RS occurs. The communication device transmits a second indicator IN2 corresponding to the RS and increases the counter by 1 (i.e., Cn=2), in response to the second event instance occurring. At a time instance t3, a third event instance for the RS occurs. The communication device transmits a third indicator IN3 corresponding to the RS and increases the counter by 1 (i.e., Cn=3), in response to the third event instance occurring. At a time instance t4, a fourth event instance for the RS occurs. The communication device transmits a fourth indicator IN4 corresponding to the RS and increases the counter by 1 (i.e., Cn=4), in response to the fourth event instance occurring. At a time instance t5, a fifth event instance for the RS occurs. The communication device transmits a fifth indicator IN5 corresponding to the RS and increases the counter by 1 (i.e., Cn=5), in response to the fifth event instance occurring. At a time instance t6, the timer TM2 expires.

In FIG. 9, the communication device determines whether the RS satisfies the condition, e.g., when the timer TM2 expires. In detail, the communication device determines that the RS satisfies the condition in response to the variable Cn (i.e., 5) not being smaller than the threshold number Cn_TH. Accordingly, the communication device transmits UL channel(s) UL_C (e.g., the first UL channel in the process 30, the at least one PUSCH in the examples for the process 50 or the UL channel in the examples for the process 50) to the network at a time instance (e.g., a time instance t7 after the time instance t6) in response to the RS satisfying the condition. In addition, the communication device resets the variable Cn as 0 in response to the timer TM2 expiring or the communication device transmitting the UL channel(s) UL_C.

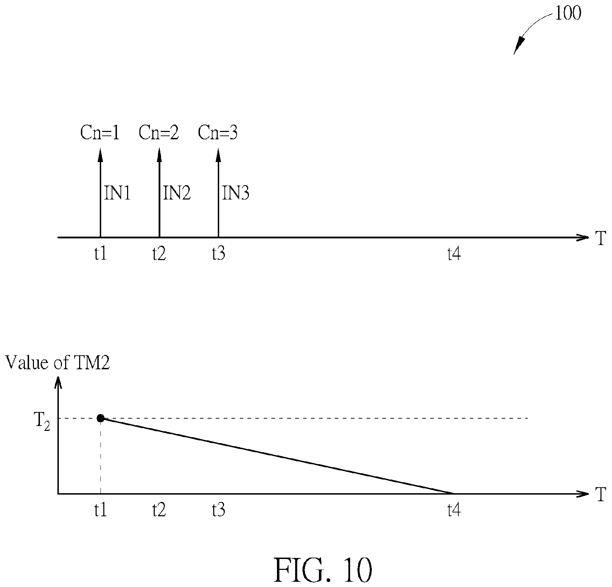

FIG. 10 is a schematic diagram of a determination 100 on whether at least one RS satisfies a condition (e.g., the condition in the process 30 or the execution condition in the examples for the process 50) according to an example of the present invention. A communication device is configured with a timer TM2 and a counter. The timer TM2 and the counter are configured with a fixed value T2 and a threshold number Cn_TH of a variable Cn, respectively. The communication device sets the variable Cn as 0, and the threshold number Cn_TH of the variable Cn is configured as 4 by a network. In FIG. 10, the communication device and the timer TM2 correspond to a time domain T. Each of arrows on the time domain T for the communication device represents that a lower layer (e.g., the physical layer) of the communication device transmits an indication to a higher layer (e.g., the MAC layer) of the communication device at a time instance, or represents that the communication device a UL channel to the network at a time instance.

At a time instance t1, a first event instance for a RS occurs. The communication device transmits a first indicator IN1 corresponding to the RS, increases the counter by 1 (i.e., Cn=1) and starts the timer TM2, in response to the first event instance occurring. At a time instance t2, a second event instance for the RS occurs. The communication device transmits a second indicator IN2 corresponding to the RS and increases the counter by 1 (i.e., Cn=2), in response to the second event instance occurring. At a time instance t3, a third event instance for the RS occurs. The communication device transmits a third indicator IN3 corresponding to the RS and increases the counter by 1 (i.e., Cn=3), in response to the third event instance occurring. At a time instance t4, the timer TM2 expires.

In FIG. 10, the communication device determines whether the RS satisfies the condition, when the timer TM2 expires. In detail, the communication device determines that no RS satisfies the condition in response to the value Cn (i.e., 3) being smaller than the threshold number Cn_TH. Accordingly, the communication device does not transmit UL channel(s) to the network in response to no RS satisfying the condition. In addition, the communication device resets the value Cn as 0 in response to the timer TM2 expiring.

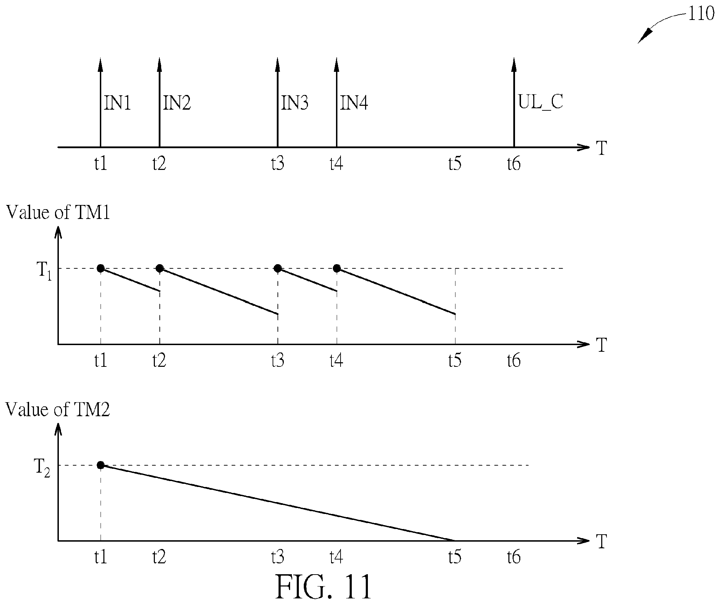

FIG. 11 is a schematic diagram of a determination 110 on whether at least one RS satisfies a condition (e.g., the condition in the process 30 or the execution condition in the examples for the process 50) according to an example of the present invention. A communication device is configured with a timer TM1 and a timer TM2. The timer TM1 and the timer TM2 are configured with a fixed value T1 and a fixed value T2, respectively. In FIG. 11, the communication device, the timer TM1 and the timer TM2 correspond to a time domain T. Each of arrows on the time domain T for the communication device represents that a lower layer (e.g., the physical layer) of the communication device transmits an indication to a higher layer (e.g., the MAC layer) of the communication device at a time instance, or represents that the communication device transmits a UL channel to the network at a time instance.

At a time instance t1, a first event instance for a RS occurs. The communication device transmits a first indicator IN1 corresponding to the RS and starts the timers TM1 and TM2, in response to the first event instance occurring. At a time instance t2, a second event instance for the RS occurs. The communication device transmits a second indicator IN2 corresponding to the RS and restarts the timer TM1, in response to the second event instance occurring. At a time instance t3, a third event instance for the RS occurs. The communication device transmits a third indicator IN3 corresponding to the RS and restarts the timer TM1, in response to the third event instance occurring. At a time instance t4, a fourth event instance for the RS occurs. The communication device transmits a fourth indicator IN4 corresponding to the RS and restarts the timer TM1, in response to the fourth event instance occurring. At a time instance t5, the timer TM2 expires.

In FIG. 11, the communication device determines whether the RS satisfies the condition, e.g., when the timer TM2 expires. In detail, the communication device determines that the RS satisfies the condition in response to the timer TM1 not expiring at the time instance t5. Accordingly, the communication device transmits UL channel(s) UL_C (e.g., the first UL channel in the process 30, the at least one PUSCH in the examples for the process 50 or the UL channel in the examples for the process 50) to the network at a time instance after the time instance t5 (e.g., a time instance t6) in response to the RS satisfying the condition. In addition, the communication device resets the variable Cn as 0 in response to the timer TM2 expiring or the communication device transmitting the UL channel(s) UL_C.

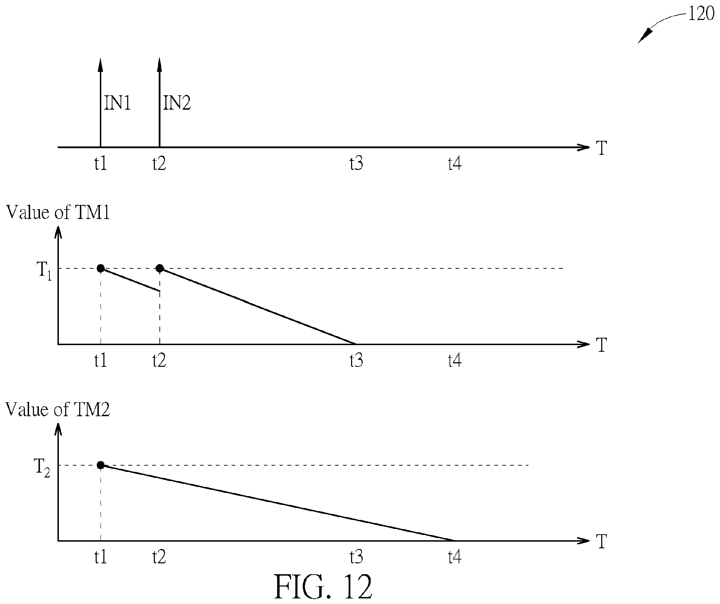

FIG. 12 is a schematic diagram of a determination 120 on whether at least one RS satisfies a condition (e.g., the condition in the process 30 or the execution condition in the examples for the process 50) according to an example of the present invention. A communication device is configured with a timer TM1 and a timer TM2. The timer TM1 and the timer TM2 are configured with a fixed value T1 and a fixed value T2, respectively. In FIG. 12, the communication device, the timer TM1 and the timer TM2 correspond to a time domain T. Each of arrows on the time domain T for the communication device represents that a lower layer (e.g., the physical layer) of the communication device transmits an indication to a higher layer (e.g., the MAC layer) of the communication device at a time instance, or represents that the communication device transmits a UL channel to the network at a time instance.

At a time instance t1, a first event instance for a RS occurs. The communication device transmits a first indicator IN1 corresponding to the RS and starts the timers TM1 and TM2, in response to the first event instance occurring. At a time instance t2, a second event instance for the RS occurs. The communication device transmits a second indicator IN2 corresponding to the RS and restarts the timer TM1, in response to the second event instance occurring. At a time instance t3, the timer TM1 expires. At a time instance t4, the timer TM2 expires.

In FIG. 12, the communication device determines whether the RS satisfies the condition, when the timer TM2 expires. In detail, the communication device determines that no RS satisfies the condition in response to the timer TM1 expiring at the time instance t3 before the timer TM2 expires. Accordingly, the communication device does not transmit UL channel(s) to the network in response to no RS satisfying the condition. In addition, the communication device resets the variable Cn as 0 in response to the timer TM2 expiring.

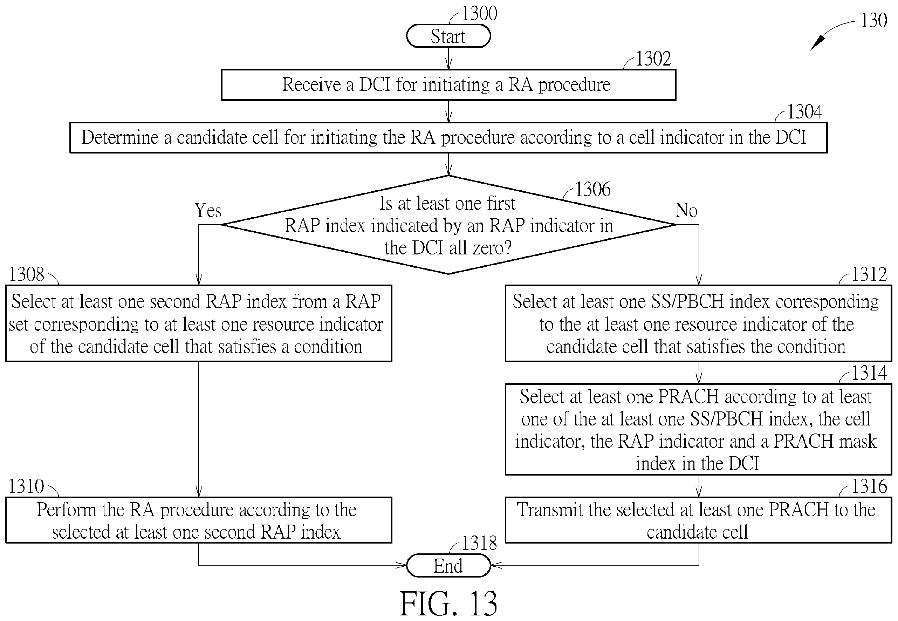

FIG. 13 is a flowchart of a process 130 according to an example of the present invention. The process 130 may be utilized in a communication device (e.g., a communication device 14 in FIG. 1), to handle UL transmission according to a DCI (e.g., a PDCCH order). The process 130 may be compiled into the program codes 214 and includes the following steps:

Step 1300:  Start.
Step 1302:  Receive a DCI for initiating a RA procedure.
Step 1304:  Determine a candidate cell for initiating the RA procedure according to a cell indicator in the DCI.
Step 1306:  Is at least one first RAP index indicated by an RAP indicator in the DCI all zero? If yes, perform Step 1308. If no, perform Step 1312.
Step 1308:  Select at least one second RAP index from a RAP set corresponding to at least one resource indicator of the candidate cell that satisfies a condition.
Step 1310:  Perform the RA procedure according to the selected at least one second RAP index, and perform Step 1318.
Step 1312:  Select at least one SS/PBCH index corresponding to the at least one resource indicator of the candidate cell that satisfies the condition.
Step 1314:  Select at least one PRACH according to at least one of the at least one SS/PBCH index, the cell indicator, the RAP indicator and a PRACH mask index in the DCI.
Step 1316:  Transmit the selected at least one PRACH to the candidate cell.
Step 1318:  End.

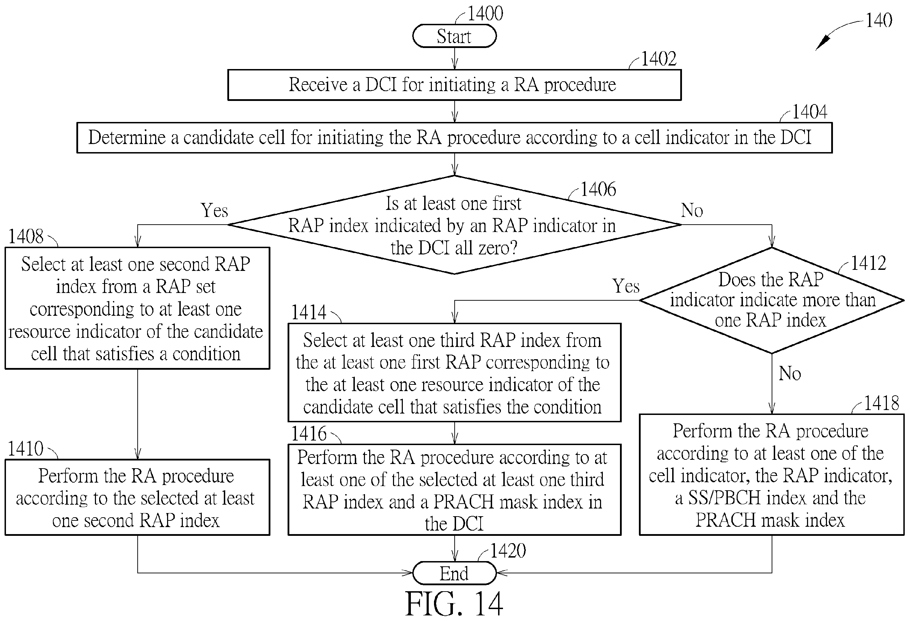

FIG. 14 is a flowchart of a process 140 according to an example of the present invention. The process 140 may be utilized in a communication device (e.g., a communication device 14 in FIG. 1), to handle UL transmission according to a DCI (e.g., a PDCCH order). The process 140 may be compiled into the program codes 214 and includes the following steps:

Step 1400:  Start.
Step 1402:  Receive a DCI for initiating a RA procedure.
Step 1404:  Determine a candidate cell for initiating the RA procedure according to a cell indicator in the DCI.

(continued)

| Step 1406: | Is at least one first RAP index indicated by an RAP indicator in the DCI all zero? If yes, perform Step 1408. If no, perform Step 1412. |
| --- | --- |
| Step 1408: | Select at least one second RAP index from a RAP set corresponding to at least one resource indicator of the candidate cell that satisfies a condition. |
| Step 1410: | Perform the RA procedure according to the selected at least one second RAP index, and perform Step 1420. |
| Step 1412: | Does the RAP indicator indicate more than one RAP index? If yes, perform Step 1414. If no, perform Step 1418. |
| Step 1414: | Select at least one third RAP index from the at least one first RAP corresponding to the at least one resource indicator of the candidate cell that satisfies the condition. |
| Step 1416: | Perform the RA procedure according to at least one of the selected at least one third RAP index and a PRACH mask index in the DCI, and perform Step 1420. |
| Step 1418: | Perform the RA procedure according to at least one of the cell indicator, the RAP indicator, a SS/PBCH index and the PRACH mask index. |
| Step 1420: | End. |

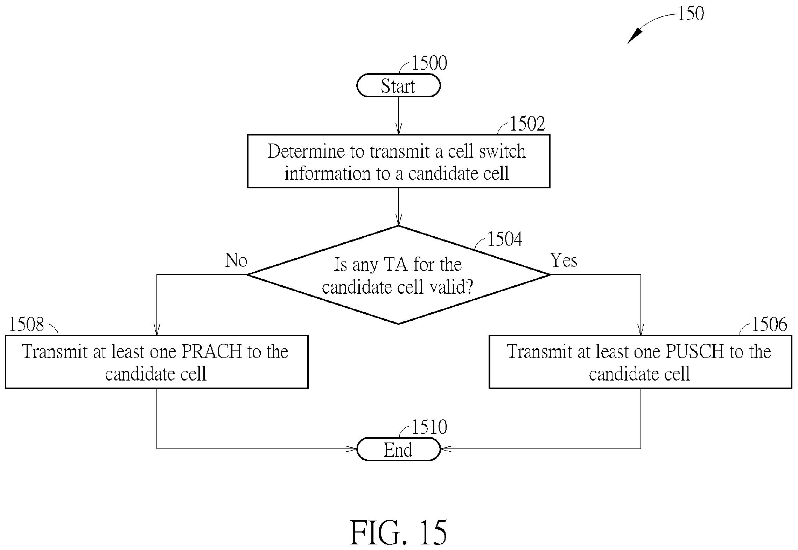

FIG. 15 is a flowchart of a process 150 according to an example of the present invention. The process 150 may be utilized in a communication device (e.g., a communication device 14 in FIG. 1), to handle UL transmission (e.g., a cell switch procedure for the communication device). The process 150 may be compiled into the program codes 214 and includes the following steps:

| Step 1500: | Start. |
| --- | --- |
| Step 1502: | Determine to transmit a cell switch information to a candidate cell. |
| Step 1504: | Is any TA for the candidate cell valid? If yes, perform Step 1506. If no, perform Step 1508. |
| Step 1506: | Transmit at least one PUSCH to the candidate cell, and perform Step 1510. |
| Step 1508: | Transmit at least one PRACH to the candidate cell. |
| Step 1510: | End. |

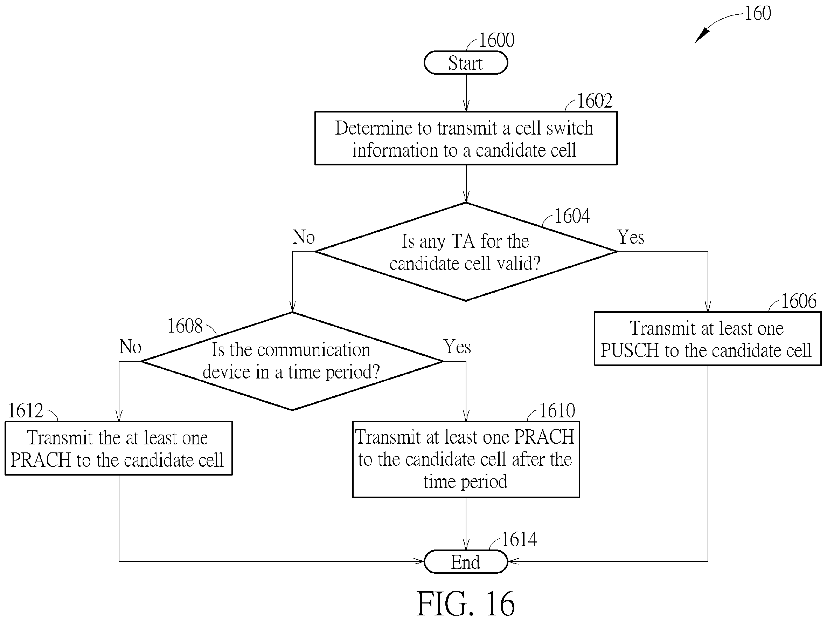

FIG. 16 is a flowchart of a process 160 according to an example of the present invention. The process 160 may be utilized in a communication device (e.g., a communication device 14 in FIG. 1), to handle UL transmission (e.g., a cell switch procedure for the communication device). The process 160 may be compiled into the program codes 214 and includes the following steps:

| Step 1600: | Start. |
| --- | --- |
| Step 1602: | Determine to transmit a cell switch information to a candidate cell. |
| Step 1604: | Is any TA for the candidate cell valid? If yes, perform Step 1606. If no, perform Step 1608. |
| Step 1606: | Transmit at least one PUSCH to the candidate cell, and perform Step 1614. |
| Step 1608: | Is the communication device in a time period? If yes, perform Step 1610. If no, perform Step 1612. |
| Step 1610: | Transmit at least one PRACH to the candidate cell after the time period, and perform Step 1614. |
| Step 1612: | Transmit the at least one PRACH to the candidate cell. |
| Step 1614: | End. |

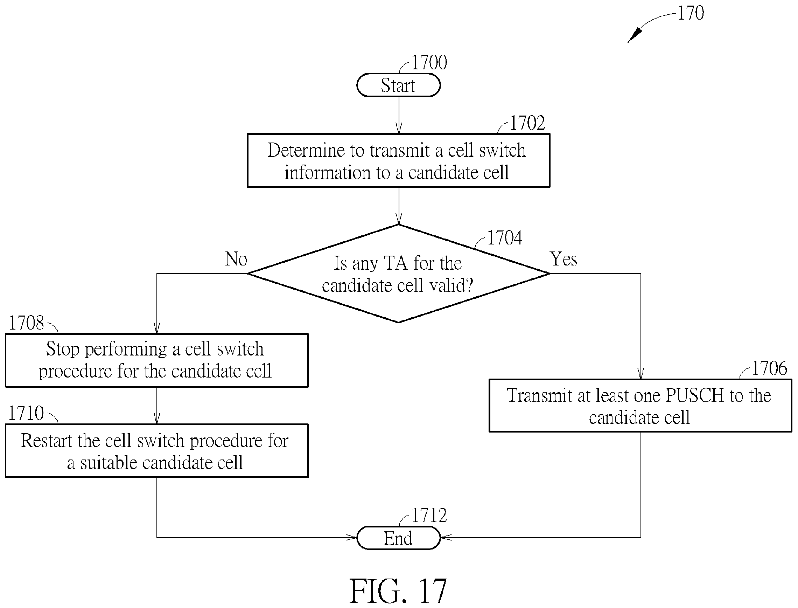

FIG. 17 is a flowchart of a process 170 according to an example of the present invention. The process 170 may be utilized in a communication device (e.g., a communication device 14 in FIG. 1), to handle UL transmission (e.g., a cell switch procedure for the communication device). The process 170 may be compiled into the program codes 214 and includes the following steps:

| Step 1700: | Start. |
| --- | --- |
| Step 1702: | Determine to transmit a cell switch information to a candidate cell. |
| Step 1704: | Is any TA for the candidate cell valid? If yes, perform Step 1706. If no, perform Step 1708. |

(continued)

| Step 1706: | Transmit at least one PUSCH to the candidate cell, and perform Step 1712. |
| Step 1708: | Stop performing a cell switch procedure for the candidate cell. |
| Step 1710: | Restart the cell switch procedure for a suitable candidate cell. |
| Step 1712: | End. |

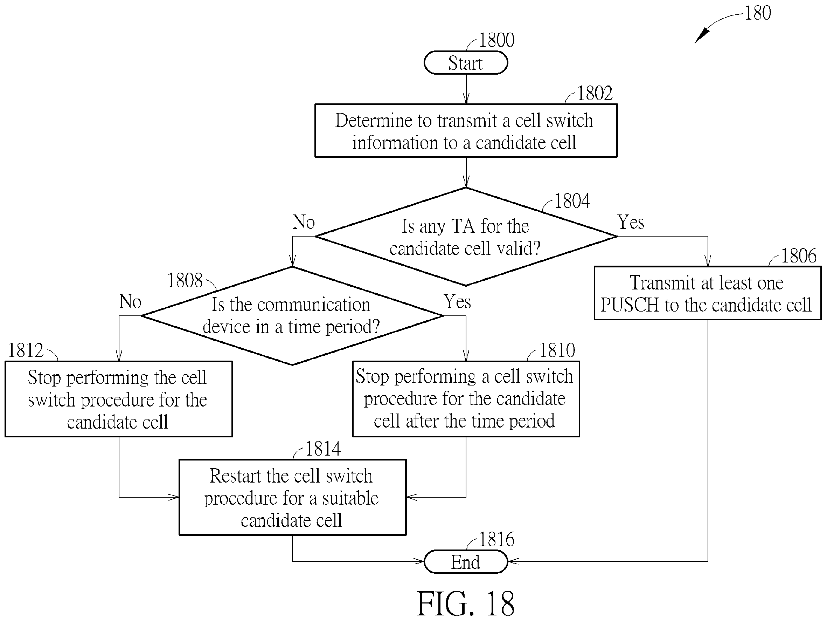

FIG. 18 is a flowchart of a process 180 according to an example of the present invention. The process 180 may be utilized in a communication device (e.g., a communication device 14 in FIG. 1), to handle UL transmission (e.g., a cell switch procedure for the communication device). The process 180 may be compiled into the program codes 214 and includes the following steps:

| Step 1800: | Start. |
| Step 1802: | Determine to transmit a cell switch information to a candidate cell. |
| Step 1804: | Is any TA for the candidate cell valid? If yes, perform Step 1806. If no, perform Step 1808. |
| Step 1806: | Transmit at least one PUSCH to the candidate cell, and perform Step 1816. |
| Step 1808: | Is the communication device in a time period? If yes, perform Step 1810. If no, perform Step 1812. |
| Step 1810: | Stop performing a cell switch procedure for the candidate cell after the time period, and perform Step 1814. |

| Step 1812: | Stop performing the cell switch procedure for the candidate cell. |
| Step 1814: | Restart the cell switch procedure for a suitable candidate cell. |
| Step 1816: | End. |

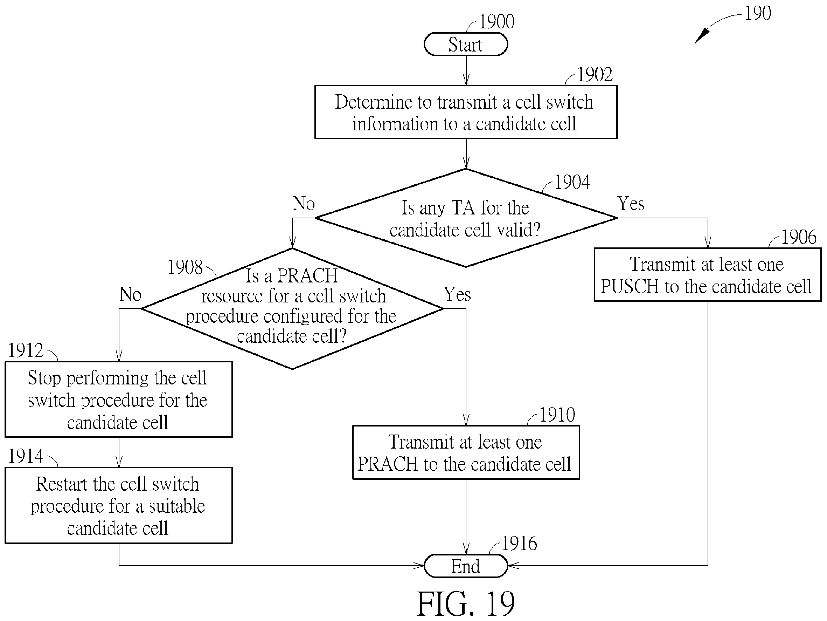

FIG. 19 is a flowchart of a process 190 according to an example of the present invention. The process 190 may be utilized in a communication device (e.g., a communication device 14 in FIG. 1), to handle UL transmission (e.g., a cell switch procedure for the communication device). The process 190 may be compiled into the program codes 214 and includes the following steps:

| Step 1900: | Start. |
| Step 1902: | Determine to transmit a cell switch information to a candidate cell. |
| Step 1904: | Is any TA for the candidate cell valid? If yes, perform Step 1906. If no, perform Step 1908. |
| Step 1906: | Transmit at least one PUSCH to the candidate cell, and perform Step 1916. |
| Step 1908: | Is a PRACH resource for a cell switch procedure configured for the candidate cell? If yes, perform Step 1910. If no, perform Step 1912. |
| Step 1910: | Transmit at least one PRACH to the candidate cell, and perform Step 1916. |
| Step 1912: | Stop performing the cell switch procedure for the candidate cell. |
| Step 1914: | Restart the cell switch procedure for a suitable candidate cell. |
| Step 1916: | End. |

In the processes 150-160, the at least one PUSCH comprises the cell switch request, and/or the at least one PRACH comprises the cell switch request.

In processes 170-190, the at least one PUSCH comprises the cell switch request, and the suitable candidate cell satisfies a condition (e.g., the one of the at least one condition in the examples for the process 50).

The terms of "first", "second", ..., "ninth" and "tenth" described above are used to distinguish the relevant statements, and do not limit the order of the relevant statements. The operation of "determine" described above may be replaced by the operation of "compute", "calculate", "obtain", "generate", "output, "use", "choose/select", "decide" or "is configured to". The phrase of "according to" described above may be replaced by "in response to". The term of "via" described above may be replaced by "on", "in" or "at". The term of "when", "if' or "since" described above may be replaced by "in response to". The term of "candidate cell" described above may be replaced by the term of "candidate RS" or "candidate beam". The term of "cell switch request" described above may be replaced by "cell switch command". The term of "cell switch" described above may be replaced by "beam switch". The term of "time window" described above may be replaced by "time period" or "time duration".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present invention provide methods and a communication device for handling UL transmission. The communication device transmits a measurement report via a UL channel when a specific condition occurs, instead of periodically reporting the measurement report. Thus, UL resources for periodically reporting the measurement report can be saved. In addition, the communication device (e.g., with a valid TA) performs UL transmissions without a cell/beam switch indication from the network, in order to perform a cell/beam switch procedure.

**Claims**

1. A method for a communication device (14, 20) handling uplink, UL, transmission, **characterized by**:

    receiving a first configuration from a network (12, 20), wherein the first configuration comprises a set of reference signals, RSs (302);
    performing at least one measurement for the set of RSs, to generate a measurement report (304);
    performing at least one communication operation with the network (12, 20) according to at least one configuration, wherein the at least one configuration is different from the first configuration;
    transmitting a first UL channel to the network (12, 20) in response to at least one RS of the set of RSs satisfying a condition (306); and
    transmitting a second UL channel comprising the measurement report to the network (12, 20) (308).

2. The method of claim 1, **characterized in that** the first UL channel satisfies at least one of following conditions:

    the first UL channel comprises a physical UL control channel, PUCCH;
    the first UL channel carries a 1-bit information;
    the first UL channel is configured with at least one of a first periodicity and a first offset; and
    the first UL channel indicates that the second UL channel carries the measurement report.

3. The method of claim 1, **characterized in that** the second UL channel satisfies at least one of following conditions:

    the second UL channel comprises a configured grant physical UL shared channel, CG-PUSCH; and
    the second UL channel is configured with at least one of a second periodicity and a second offset.

4. The method of claim 1, **characterized in that** the first UL channel and the second UL channel satisfy at least one of following conditions:

    the first UL channel and the second UL channel are configured with a same periodicity; and
    the first UL channel and the second UL channel are respectively configured with an offset.

5. The method of claim 1, **characterized in that** the measurement report comprises at least one of a first number of the set of RSs, at least one signal quality, a plurality of differential signal qualities and an event identity, ID, wherein the first number is configured by a first higher layer signal.

6. The method of claim 1, **characterized in that** the communication device (14, 20) is configured by a second higher layer signal indicating a unified transmission configuration indicator, TCI, state.

7. The method of claim 1, **characterized in that** the method further comprises:

   determining that the at least one RS satisfies the condition in response to a second number of at least one event instance for the at least one RS within a time window not being smaller than a third number, wherein the time window is configured by a third higher layer signal, and wherein the third number is configured by a fourth higher layer signal.

8. The method of claim 7, **characterized in that** the at least one event instance indicates that at least one signal quality of the at least one RS becomes a threshold better than a signal quality of a RS.

9. The method of claim 8, **characterized in that** the at least one signal quality comprises at least one layer 1 reference signal received power, L1-RSRP.

10. The method of claim 7, **characterized in that** the method further comprises:
    starting the time window in response to a first one of the at least one event instance occurring.

11. The method of claim 7, **characterized in that** the method further comprises:
    determining the at least one event instance according to a periodicity of the set of RSs.

12. The method of claim 1, **characterized in that** the method further comprises:
    determining that the at least one RS does not satisfy the condition in response to a second number of at least one event instance for the at least one RS within a time window being smaller than a third number.

13. The method of claim 12, **characterized in that** the method further comprises:
    resetting a counter for determining the second number of the at least one event instance after the time window.

14. The method of claim 1, **characterized in that** the first UL channel corresponds to a first priority index.

15. The method of claim 14, **characterized in that** the method further comprises at least one of following steps:

    transmitting the first UL channel and disabling transmitting a third UL channel in response to the first priority index being greater than a second priority index of the third UL channel; and
    disabling transmitting the first UL channel and transmitting the third UL channel in response to the first priority index not being greater than the second priority index of the third UL channel.

16. The method of claim 1, **characterized in that** the second UL channel corresponds to a third priority index.

17. The method of claim 16, **characterized in that** the method further comprises at least one of following steps:

    transmitting the second UL channel and disabling transmitting a fourth UL channel in response to the third priority index being greater than a fourth priority index of the fourth UL channel; and
    disabling transmitting the second UL channel and transmitting the fourth UL channel in response to the third priority index not being greater than the fourth priority index of the fourth UL channel.

18. The method of claim 1, **characterized in that** the method further comprises:
    transmitting capability information regarding to a maximum number for the set of RSs to the network (12, 20).

19. The method of claim 1, **characterized in that** the at least one communication operation comprises at least one of following operations:

    receiving a downlink, DL, control information, DCI, from the network (12, 20) via a first cell;

receiving a DL channel from the network (12, 20) via a second cell; and
transmitting a fifth UL channel to the network (12, 20) via the second cell;
wherein the first cell is the same as or different from the second cell.

20. The method of claim 1, **characterized in that** the at least one configuration comprises at least one of following factors:

a search space, SS, set configuration;
a control resource set, CORESET, configuration;
a second configuration for receiving a DL channel;
a third configuration for configuring a first cell to receive a DCI;
a TCI state; and
a sounding reference signal, SRS, resource indicator, SRI.

21. A communication device (14, 20) for handling uplink, UL, transmission, **characterized by**:

at least one storage device; and
at least one processing circuit, coupled to the at least one storage device, wherein the at least one storage device is configured to store instructions, and the at least one processing circuit is configured to execute the instructions of:
receiving a first configuration from a network (12, 20), wherein the first configuration comprises a set of reference signals, RSs (302);
performing at least one measurement for the set of RSs, to generate a measurement report (304);
performing at least one communication operation with the network (12, 20) according to at least one configuration, wherein the at least one configuration is different from the first configuration;
transmitting a first UL channel to the network (12, 20) in response to at least one RS of the set of RSs satisfying a condition (306); and
transmitting a second UL channel comprising the measurement report to the network (12, 20) (308).

22. A method for a network (12, 20) handling uplink, UL, transmission, **characterized by**:

transmitting a first configuration to a communication device(14, 20), wherein the first configuration comprises a set of reference signals, RSs (402);
performing at least one communication operation with the communication device (14, 20) according to at least one configuration, wherein the at least one configuration is different from the first configuration;
receiving a first UL channel from the communication device (14, 20) in response to at least one RS of the set of RSs satisfying a condition (404); and
receiving a second UL channel comprising a measurement report for the set of RSs from the communication device (14, 20) (406).

10

Network ~12

Communication device ... Communication device ... Communication device

14 14 14

FIG. 1

Communication device

Program codes

214

At least one
storage device

210

At least one
processing circuit

200

At least one
communication
interfacing device

220

20

FIG. 2

_30

```
      ┌─────────┐  300
      ( Start   )─╯
      └─────────┘
           │
           ▼
┌────────────────────────────────────────────────┐  302
│ Receive a first configuration from a network,    │─╯
│ wherein the first configuration comprises a      │
│ set of RSs                                       │
└────────────────────────────────────────────────┘
           │
           ▼
┌────────────────────────────────────────────────┐  304
│ Perform at least one measurement for the set of  │─╯
│ RSs, to generate a measurement report            │
└────────────────────────────────────────────────┘
           │
           ▼
┌────────────────────────────────────────────────┐  306
│ Transmit a first UL channel to the network in    │─╯
│ response to at least one RS of the set of RSs    │
│ satisfying a condition                           │
└────────────────────────────────────────────────┘
           │
           ▼
┌────────────────────────────────────────────────┐  308
│ Transmit a second UL channel comprising the      │─╯
│ measurement report to the network                │
└────────────────────────────────────────────────┘
           │
           ▼
      ┌─────────┐  310
      ( End     )─╯
      └─────────┘
```

# FIG. 3

40

400

Start

Transmit a first configuration to a communication device,
wherein the first configuration comprises a set of RSs
402

Receive a first UL channel from the communication
device in response to at least one RS of the set of RSs
satisfying a condition
404

Receive a second UL channel comprising a measurement
report for the set of RSs from the communication device
406

End
408

FIG. 4

50

```
      ┌──────────────┐  500
      (    Start     )
      └──────┬───────┘
             │
             ▼
┌────────────────────────────────────────────┐
│  Receive a configuration from a network,     │
│  wherein the configuration comprises a set    │  502
│  of candidate configurations and each         │
│  candidate configuration in the set of        │
│  candidate configurations comprises at least  │
│  one of a candidate ID, a physical cell ID,   │
│  a SSB frequency, a SCS of the SSB, a         │
│  SSB periodicity and a SSB transmission       │
│  power                                         │
└────────────────────────────────────────────┘
             │
             ▼
┌────────────────────────────────────────────┐
│  Perform at least one UL transmission with a  │  504
│  candidate cell corresponding to a candidate  │
│  configuration in the set of candidate        │
│  configurations according to at least one     │
│  indicator                                     │
└────────────────────────────────────────────┘
             │
             ▼
      ┌──────────────┐  506
      (     End      )
      └──────────────┘
```

FIG. 5

60

600
Start

Generate a configuration, wherein the configuration comprises a set of candidate configurations and each candidate configuration in the set of candidate configurations comprises at least one of a candidate ID, a physical cell ID, a SSB frequency, a SCS of the SSB, a SSB periodicity and a SSB transmission power

602

Transmit the configuration to a communication device

604

606
End

FIG. 6

FIG. 7

EP 4 629 547 A1

FIG. 8

FIG. 9

EP 4 629 547 A1

FIG. 10

FIG. 11

EP 4 629 547 A1

IN1

IN2

t1  t2  t3  t4  T

Value of TM1

$T_1$

t1  t2  t3  t4  T

Value of TM2

$T_2$

t1  t2  t3  t4  T

FIG. 12

EP 4 629 547 A1

```
                            ┌─1300
                          ( Start )                                    ┌─130
                              │                                       ↗
                              │                  ┌─1302
        ┌─────────────────────────────────────────────────┐
        │      Receive a DCI for initiating a RA procedure  │
        └─────────────────────────────────────────────────┘
                              │                                 ┌─1304
   ┌────────────────────────────────────────────────────────────────────────────┐
   │ Determine a candidate cell for initiating the RA procedure according to a cell indicator in the DCI │
   └────────────────────────────────────────────────────────────────────────────┘
                              │
                              │                       ┌─1306
                     ╱────────────────────╲
          Yes       ╱     Is at least one first       ╲       No
        ◀──────────  RAP index indicated by an RAP indicator in  ──────────▶
                     ╲          the DCI all zero?     ╱
                      ╲────────────────────╱
```

1308 ┐

```
┌──────────────────────────────────┐        ┌───────────────────────────────────────┐   ┌─1312
│ Select at least one second RAP index from a RAP │        │ Select at least one SS/PBCH index corresponding │
│ set corresponding to at least one resource indicator │        │ to the at least one resource indicator of the │
│ of the candidate cell that satisfies a condition │        │ candidate cell that satisfies the condition │
└──────────────────────────────────┘        └───────────────────────────────────────┘
```

┌─1314

```
                                             ┌───────────────────────────────────────┐
                                             │ Select at least one PRACH according to at least │
                                             │ one of the at least one SS/PBCH index, the cell │
                                             │ indicator, the RAP indicator and a PRACH mask │
                                             │           index in the DCI              │
                                             └───────────────────────────────────────┘
```

1310 ┐                                        ┌─1316

```
┌──────────────────────────────────┐        ┌───────────────────────────────────────┐
│ Perform the RA procedure according to the │        │ Transmit the selected at least one PRACH to the │
│ selected at least one second RAP index │        │           candidate cell                │
└──────────────────────────────────┘        └───────────────────────────────────────┘
                              │        ┌─1318            │
                              └──────▶( End )◀───────────┘
```

## FIG. 13

EP 4 629 547 A1

Start ⟶ 1400

Receive a DCI for initiating a RA procedure ⟶ 1402

Determine a candidate cell for initiating the RA procedure according to a cell indicator in the DCI ⟶ 1404

Is at least one first RAP index indicated by an RAP indicator in the DCI all zero? ⟶ 1406

Yes

**1408** — Select at least one second RAP index from a RAP set corresponding to at least one resource indicator of the candidate cell that satisfies a condition

**1410** — Perform the RA procedure according to the selected at least one second RAP index

No

Does the RAP indicator indicate more than one RAP index ⟶ 1412

Yes

**1414** — Select at least one third RAP index from the at least one first RAP corresponding to the at least one resource indicator of the candidate cell that satisfies the condition

**1416** — Perform the RA procedure according to at least one of the selected at least one third RAP index and a PRACH mask index in the DCI

No

**1418** — Perform the RA procedure according to at least one of the cell indicator, the RAP indicator, a SS/PBCH index and the PRACH mask index

End ⟶ 1420

FIG. 14

140

36

150

1500
Start

1502
Determine to transmit a cell switch
information to a candidate cell

1504
Is any TA for the
candidate cell valid?

No

Yes

1508
Transmit at least one PRACH to the
candidate cell

1506
Transmit at least one PUSCH to the
candidate cell

1510
End

FIG. 15

```
                              ┌─────────┐ ⌐1600
                              (  Start  )
                              └─────────┘
                                   │
                                   ▼           ⌐1602
                    ┌──────────────────────────────┐
                    │ Determine to transmit a cell switch │
                    │  information to a candidate cell  │
                    └──────────────────────────────┘
                                   │
                                   ▼        ⌐1604
                                  ╱ ╲
              No               ╱     ╲              Yes
        ┌───────────────  Is any TA for the  ───────────────┐
        │                ╲ candidate cell valid? ╱          │
        │                  ╲               ╱                 │
        ▼                     ╲         ╱                    ▼
      ╱ ╲ ⌐1608                 ╲     ╱               ┌─────────────┐ ⌐1606
     ╱     ╲                      ╲ ╱                 │ Transmit at least one │
No ╱  Is the communication ╲ Yes                     │ PUSCH to the candidate cell │
┌─  ╲   device in a time period? ╱ ─┐                └─────────────┘
│    ╲                       ╱      │                        │
│      ╲                   ╱        │                        │
▼ ⌐1612   ╲             ╱      ▼ ⌐1610                        │
┌────────────────┐    ┌──────────────────┐                  │
│ Transmit the at least one │  │ Transmit at least one PRACH │              │
│ PRACH to the candidate cell │  │ to the candidate cell after the │          │
└────────────────┘    │      time period      │                  │
        │             └──────────────────┘                  │
        │                        │                           │
        │                        ▼ ⌐1614                      │
        │                  ┌─────────┐                        │
        └────────────────►(   End   )◄───────────────────────┘
                          └─────────┘
```

FIG. 16

1700
Start

1702
Determine to transmit a cell switch information to a candidate cell

1704
Is any TA for the candidate cell valid?

No

Yes

1708
Stop performing a cell switch procedure for the candidate cell

1710
Restart the cell switch procedure for a suitable candidate cell

1706
Transmit at least one PUSCH to the candidate cell

1712
End

170

FIG. 17

EP 4 629 547 A1

180

1800
Start

1802
Determine to transmit a cell switch
information to a candidate cell

1804
Is any TA for the
candidate cell valid?

No ——→ ← Yes

1808
Is the communication
device in a time period?

No ← → Yes

1806
Transmit at least one
PUSCH to the candidate cell

1812
Stop performing the cell
switch procedure for the
candidate cell

1810
Stop performing a cell switch
procedure for the candidate
cell after the time period

1814
Restart the cell switch
procedure for a suitable
candidate cell

1816
End

FIG. 18

FIG. 19

EP 4 629 547 A1

Europäisches
Patentamt

European
Patent Office

Office européen
des brevets

# EUROPEAN SEARCH REPORT

**Application Number**

EP 25 16 6334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BO GAO ET AL: "Discussion on enhancements for UE-initiated/event-driven beam management", 3GPP DRAFT; R1-2400278; TYPE DISCUSSION; NR_MIMO_PH5-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052568061, Retrieved from the Internet: URL:https://www.3gpp.org/ftp/TSG_RAN/WG1_RL1/TSGR1_116/Docs/R1-2400278.zip R1-2400278 Discussion on enhancements for UE-initiated event-driven beam management_final.docx [retrieved on 2024-02-19] | 1-13, 18-22 | INV. H04L5/00 |
| A | * Sections 3.1, 3.2, 4 * | 14-17 | **TECHNICAL FIELDS SEARCHED (IPC)** H04L |

-----

-/--

The present search report has been drawn up for all claims

| Place of search | Date of completion of the search | Examiner |
|---|---|---|
| The Hague | 22 August 2025 | Skraparlis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 16 6334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEI WANG ET AL: "Discussion on enhancements for UE-initiated/event-driven beam management", 3GPP DRAFT; R1-2400321; TYPE DISCUSSION; NR_MIMO_PH5-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052568104, Retrieved from the Internet: URL:https://www.3gpp.org/ftp/TSG_RAN/WG1_R L1/TSGR1_116/Docs/R1-2400321.zip R1-2400321.docx [retrieved on 2024-02-19] | 1,2,6, 14-17, 21,22 | |
| A | * Section 4, par. 1-3, Section 3, par. 1, 3, Figures 1, 2, Section 2, par. 3, "Proposal 2 [..]", Section 1, par. 1 * ----- | 3-5, 7-13, 18-20 | **TECHNICAL FIELDS SEARCHED (IPC)** |
| X | US 2019/190582 A1 (GUO LI [US] ET AL) 20 June 2019 (2019-06-20) | 1-5, 14-22 | |
| A | * par. [0174]-[0194], [0246], [0327]-[0329], [0456] * ----- | 6-13 | |

The present search report has been drawn up for all claims

| Place of search | Date of completion of the search | Examiner |
|---|---|---|
| The Hague | 22 August 2025 | Skraparlis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 6334

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2025

| Patent document cited in search report | Publication date | Patent family member(s) | | Publication date |
|---|---|---|---|---|
| US 2019190582 A1 | 20-06-2019 | CN | 111567081 A | 21-08-2020 |
| | | EP | 3711344 A1 | 23-09-2020 |
| | | KR | 20200090849 A | 29-07-2020 |
| | | US | 2019190582 A1 | 20-06-2019 |
| | | WO | 2019124983 A1 | 27-06-2019 |

EPO FORM P0459

For more details about this annex : see Official Journal of the European Patent Office, No. 12/82